# EUROPEAN PATENT APPLICATION

(11) **EP 4 765 791 A1**
(43) Date of publication of application: **24.06.2026**
(21) Application number: 24909687.6
(22) Date of filing: 22.07.2024
(51) Int. Cl.: H04M 1/7243

(54) **SAFETY PROMPTING METHOD FOR WEARABLE DEVICE, AND ELECTRONIC DEVICE**

(30) Priority: 28.12.2023 CN 202311870511
(71) Applicant: Honor Device Co., Ltd., Shenzhen, Guangdong 518040 (CN)
(72) Inventor: SONG, Chuang, Shenzhen, Guangdong 518040 (CN); XIAO, Liang, Shenzhen, Guangdong 518040 (CN); LI, Renpeng, Shenzhen, Guangdong 518040 (CN); ZHANG, Weijia, Shenzhen, Guangdong 518040 (CN); FANG, Xinkai, Shenzhen, Guangdong 518040 (CN)
(74) Representative: Gill Jennings & Every LLP
(86) International application number: PCT/CN2024/106626
(87) International publication number: WO 2025/138733

(57) **Abstract**

This application is applicable to the field of electronic device technologies, and provides a safety prompt method for a wearable device and an electronic device. The method includes: displaying, in a current device in a plurality of message reminder manners when a safety prompt message corresponding to a wearable device associated with the current device is obtained, a touch point corresponding to the safety prompt message; and processing the safety prompt message in response to a trigger operation on a target touch point, where the target touch point is any touch point. Therefore, the safety prompt message corresponding to the wearable device is displayed simultaneously in a plurality of message reminder manners, and the touch point corresponding to the safety prompt message is also provided, so that the safety prompt message can be delivered to a user in time in a plurality of manners. Therefore, when the electronic device is in various use states, the user can learn of and view the safety prompt message in time, thereby improving safety and timeliness of safety prompt delivery of the wearable device, and improving user experience.

## Description

This application claims priority to Chinese Patent Application No. 202311870511.4, filed with the China National Intellectual Property Administration on December 28, 2023 and entitled "SAFETY PROMPT METHOD FOR WEARABLE DEVICE AND ELECTRONIC DEVICE", which is incorporated herein by reference in its entirety.

### TECHNICAL FIELD

This application belongs to the field of electronic device technologies, and in particular, to a safety prompt method for a wearable device, an electronic device, and a computer-readable storage medium.

### BACKGROUND

With popularization of various electronic devices (such as a smartphone), people increasingly rely on these portable electronic devices to meet communication, entertainment, work, and information obtaining needs. For example, a wearable device such as a child phone watch can not only facilitate a child to communicate with a parent, but also meet a need that the parent knows a location and safety of the child in a timely manner.

In a related technology, because a parent pays much attention to a child's safety, for example, a safety prompt message such as whether the child arrives at school, whether the child returns home, whether the child arrives at the destination, when the child leaves, and an emergency call is very important to the parent. However, because a client of a wearable device such as a child phone watch is relatively independent, and cannot be integrated with a system of an electronic device, a safety prompt message is pushed only in an application notification push manner. A user of the electronic device generally cannot learn of and view the safety prompt message in a timely manner. Therefore, more safe information delivery experience cannot be achieved.

### SUMMARY

Embodiments of this application provide a safety prompt method for a wearable device, an electronic device, and a computer-readable storage medium, so as to resolve a problem that a safety prompt message of the wearable device is pushed only in an application notification push manner, and a user usually cannot learn of and view the safety prompt message in a timely manner, thereby failing to achieve more safe information delivery experience.

According to a first aspect, an embodiment of this application provides a safety prompt method for a wearable device, including: displaying, in a current device in a plurality of message reminder manners when a safety prompt message corresponding to a wearable device associated with the current device is obtained, a touch point corresponding to the safety prompt message, where the message reminder manners include at least two of the following manners: an always on display (always on display, AOD) interface reminder, a capsule reminder, an in-capsule notification reminder, a message center reminder, a scenario card reminder, and an associated device reminder; and processing the safety prompt message in response to a trigger operation on a target touch point, where the target touch point is any touch point.

In this way, the safety prompt message corresponding to the wearable device is displayed simultaneously in a plurality of message reminder manners such as the AOD interface reminder, the capsule reminder, the in-capsule notification reminder, the message center reminder, the scenario card reminder, and the associated device reminder, and the touch point corresponding to the safety prompt message is also provided, so that the safety prompt message can be delivered to the user in time in a plurality of manners. Therefore, when an electronic device is in various use states, the user can learn of and view the safety prompt message in time, thereby improving safety and timeliness of safety prompt delivery of the wearable device, and improving user experience.

In a possible implementation of the first aspect, the safety prompt message includes at least one of a location reminder message and a missed call reminder message.

In this way, key safety information such as the location reminder message and the missed call reminder message of the wearable device are displayed in a plurality of message prompt manners, so that the user can learn of the key safety information of the user corresponding to the wearable device in a timely manner, thereby not only improving safety and timeliness of safety prompt delivery of the wearable device, but also ensuring safety of the user corresponding to the wearable device, further improving user experience.

Optionally, in another possible implementation of the first aspect, the safety prompt message is the location reminder message, and a display region corresponding to the target touch point includes a first locating control; and correspondingly, the processing the safety prompt message in response to a trigger operation on a target touch point includes:
starting an associated application corresponding to the wearable device in response to a trigger operation on the first locating control, and jumping to a locating interface corresponding to the wearable device;
   or
starting the associated application in response to a trigger operation on another region in the display region corresponding to the target touch point, and jumping to a display interface corresponding to the safety prompt message, where the another region refers to a region other than the first locating control in the display region corresponding to the target touch point.

In this way, when the location information reminder message is displayed, a locating control is provided at a corresponding touch point, so that the user can directly reach, by using the locating control, a locating interface corresponding to the wearable device, and view location information of the wearable device in a timely manner, so that the user can directly open, by using another region in the display region, an associated application corresponding to the wearable device, so as to display the safety prompt message in the associated application, thereby improving not only safety and timeliness of safety prompt delivery of the wearable device, but further improving convenience of viewing and processing the safety prompt message, further improving user experience.

Optionally, in still another possible implementation of the first aspect, the safety prompt message is the location reminder message, and a display region corresponding to the target touch point does not include a first locating control; and correspondingly, the processing the safety prompt message in response to a trigger operation on a target touch point includes:
starting an associated application corresponding to the wearable device in response to a trigger operation on the display region corresponding to the target touch point, and jumping to a locating interface corresponding to the wearable device.

In this way, when the location information reminder message is displayed, for a message reminder manner in which a display region is relatively small, the user can directly touch, by triggering the display region of the safety prompt message, a locating interface corresponding to the wearable device to view location information of the wearable device in a timely manner, thereby improving not only safety and timeliness of safety prompt delivery of the wearable device, but further improving convenience of viewing and processing the safety prompt message, further improving user experience.

Optionally, in yet another possible implementation of the first aspect, the safety prompt message is the location reminder message; and correspondingly, the displaying, in a current device in a plurality of message reminder manners, a touch point corresponding to the safety prompt message includes:
determining a message type corresponding to the safety prompt message, where the message type includes at least one of "arrived at a specified location", "left a specified location", and "not arrived at a specified location";
determining, according to the message type corresponding to the safety prompt message, a display effect corresponding to the touch point; and
displaying, in the current device according to the display effect corresponding to the touch point, the touch point corresponding to the safety prompt message in the plurality of message reminder manners.

In this way, a display effect corresponding to the safety prompt message is determined according to a message type of the safety prompt message, so that the user can intuitively understand, according to the display effect of the safety prompt message, a safety status of the user corresponding to the wearable device, so as to process more urgent safety information in a more timely manner. Therefore, not only safety and timeliness of safety prompt delivery of the wearable device are improved, but also a visualization effect and viewing convenience of the safety prompt message are further improved, thereby further improving safety of the user corresponding to the wearable device and user experience.

Optionally, in yet another possible implementation of the first aspect, the safety prompt message is the missed call reminder message, and a display region corresponding to the target touch point includes at least one of a first callback control and a first locating control; and correspondingly, the processing the safety prompt message in response to a trigger operation on a target touch point includes:
initiating a callback to the wearable device in response to a trigger operation on the first callback control in the display region corresponding to the target touch point, displaying a call interface with the wearable device, and displaying, on the call interface, a second locating control corresponding to the wearable device;
   or
starting an associated application corresponding to the wearable device in response to a trigger operation on the first locating control, and jumping to a locating interface corresponding to the wearable device;
   or
starting the associated application in response to a trigger operation on another region in the display region corresponding to the target touch point, and jumping to a display interface corresponding to the safety prompt message, where the another region refers to a region other than the first callback control and the first locating control in the display region corresponding to the target touch point.

In this way, when a missed call reminder message is displayed, a callback control and/or a locating control are provided in a corresponding touch point, so that the user can directly call back the wearable device by using the callback control, or the user can directly reach, by using the locating control, the locating interface corresponding to the wearable device, and view location information of the wearable device in a timely manner, so that the user can directly open, by using another region in the display region, an associated application corresponding to the wearable device, so as to display the safety prompt message in the associated application, thereby improving not only safety and timeliness of safety prompt delivery of the wearable device, but further improving convenience of viewing and processing the safety prompt message, further improving user experience.

Optionally, in another possible implementation of the first aspect, the safety prompt message is the missed call reminder message, and a display region corresponding to the target touch point does not include a first callback control and a first locating control; and correspondingly, the processing the safety prompt message in response to a trigger operation on a target touch point includes:
initiating a callback to the wearable device in response to a trigger operation on the display region corresponding to the target touch point, displaying a call interface with the wearable device, and displaying, on the call interface, a second locating control corresponding to the wearable device.

In this way, when a missed call reminder message is displayed, for a message reminder manner in which a display region is relatively small, the user may directly call back the wearable device by triggering the display region of the safety prompt message, thereby improving not only safety and timeliness of safety prompt delivery of the wearable device, but further improving convenience of viewing and processing the safety prompt message, further improving user experience.

Optionally, in another possible implementation of the first aspect, after the displaying, on the call interface, a second locating control corresponding to the wearable device, the method further includes:
starting the associated application in response to a trigger operation on the second locating control, jumping to a locating interface corresponding to the wearable device, and displaying, on the locating interface, a jump control corresponding to the call interface.

In this way, in a scenario of a missed call reminder, a locating control is provided on the call interface for calling back the wearable device, so that the user can conveniently jump to the locating interface in the associated application when the electronic device is called back, and view location information of the user corresponding to the wearable device in a timely manner, so as to meet an urgent need of the user to simultaneously call back and view the locating, thereby not only improving safety and timeliness of safety prompt delivery of the wearable device, but further improving convenience of viewing and processing the safety prompt message, further ensuring safety of the user corresponding to the wearable device, and further improving user experience.

Optionally, in still another possible implementation of the first aspect, after the displaying, on the locating interface, a jump control corresponding to the call interface, the method further includes:
jumping to the call interface in response to a trigger operation on the jump control corresponding to the call interface.

In this way, in a scenario of a missed call reminder, after the user jumps to the locating interface in the associated application by using the locating control on the call interface with the wearable device, a jump control corresponding to the call interface may be further provided in the locating interface, so that the user can conveniently return to the call interface when viewing the locating, so as not to affect a normal call process of the user, and meet an urgent need of the user to simultaneously call back and view the locating, thereby not only improving safety and timeliness of safety prompt delivery of the wearable device, but further improving convenience of viewing and processing the safety prompt message, further ensuring safety of the user corresponding to the wearable device, and further improving user experience.

Optionally, in yet another possible implementation of the first aspect, the display interface corresponding to the safety prompt message further includes a second callback control; and correspondingly, the starting the associated application in response to a trigger operation on another region in the display region corresponding to the target touch point, and jumping to a display interface corresponding to the safety prompt message, the method further includes:
initiating a callback to the wearable device in response to a trigger operation on the second callback control, and displaying a call interface with the wearable device.

In this way, when a missed call reminder message is displayed, the user may directly open, by using another region in a display region corresponding to the missed call reminder message, the associated application corresponding to the wearable device, and the safety prompt message is displayed in the associated application, a callback control may be further provided in the interface, so that the user can directly call back the wearable device by using the callback control, thereby improving not only safety and timeliness of safety prompt delivery of the wearable device, but further improving convenience of viewing and processing the safety prompt message, further improving user experience.

Optionally, in yet another possible implementation of the first aspect, the displaying, in a current device in a plurality of message reminder manners, a touch point corresponding to the safety prompt message includes:
determining a device type corresponding to the current device, where the device type includes a called party and a non-called party;
determining, according to the device type corresponding to the current device, a display effect corresponding to the touch point; and
displaying, in the current device according to the display effect corresponding to the touch point, the touch point corresponding to the safety prompt message in the plurality of message reminder manners.

In this way, because one wearable device may have a plurality of associated users, such as father, mother, and another relative, when a missed call reminder message is displayed, electronic devices of the plurality of associated users of the wearable device may be notified at the same time. However, a called party and a non-called party may display the missed call reminder message by using different display effects, so that the user can intuitively understand emergency of the missed call according to the display effect of the missed call reminder message, and process a more urgent missed call in a more timely manner, preventing unnecessary panic to the non-called user. Therefore, not only safety and timeliness of safety prompt delivery of the wearable device are improved, but also a visualization effect and viewing convenience of the safety prompt message are further improved, thereby further improving safety of the user corresponding to the wearable device and user experience.

Optionally, in another possible implementation of the first aspect, the displaying, in a current device in a plurality of message reminder manners, a touch point corresponding to the safety prompt message includes:
determining an incoming call type corresponding to the missed call reminder message;
determining, according to the incoming call type corresponding to the missed call reminder message, a display effect corresponding to the touch point; and
displaying, in the current device according to the display effect corresponding to the touch point, the touch point corresponding to the safety prompt message in the plurality of message reminder manners.

In this way, because emergency degrees of different missed calls are different, a display effect of a missed call reminder message is determined according to an incoming call type of a missed call, so that different emergency degrees are represented by using different display effects, so that a user can intuitively understand emergency of the missed call according to the display effect of the missed call reminder message, and process a more urgent missed call in a more timely manner. Therefore, not only safety and timeliness of safety prompt delivery of the wearable device are improved, but also a visualization effect and viewing convenience of the safety prompt message are further improved, thereby further improving safety of the user corresponding to the wearable device and user experience.

Optionally, in still another possible implementation of the first aspect, a message reminder manner corresponding to the target touch point is the capsule reminder; and correspondingly, the processing the safety prompt message in response to a trigger operation on a target touch point includes:
switching the message reminder manner corresponding to the target touch point to the in-capsule notification reminder in response to the trigger operation on the target touch point, and displaying the target touch point in the in-capsule notification reminder manner.

In this way, a display region corresponding to a message reminder manner of a capsule notification is relatively small, and a safety prompt message cannot be fully displayed. Therefore, when the user triggers a touch point of a capsule notification type, a message reminder manner of the touch point may be switched to an in-capsule notification reminder with a relatively large display region, so that the user can quickly view complete information of the safety prompt, thereby improving not only safety and timeliness of safety prompt delivery of the wearable device, but further improving convenience of viewing and processing the safety prompt message, further improving user experience.

Optionally, in yet another possible implementation of the first aspect, before the displaying, in a current device in a plurality of message reminder manners when a safety prompt message corresponding to a wearable device associated with the current device is obtained, a touch point corresponding to the safety prompt message, the method further includes:
displaying, in the current device, a scenario card corresponding to a safety prompt function of the wearable device, where the scenario card includes an enable control;
starting, in response to a trigger operation on the enable control, the associated application corresponding to the wearable device, and jumping to a function enabling interface corresponding to the safety prompt function; and
enabling the safety prompt function of the wearable device in the current device in response to a setting operation performed by a user on the function enabling interface.

In this way, the user is reminded, in the scenario card manner, to enable the safety prompt function of the wearable device, so that the user can enable the safety prompt function of the wearable device in a timely and convenient manner. Therefore, not only safety and timeliness of safety prompt delivery of the wearable device are improved, but also convenience of enabling the safety prompt function is further improved, further improving user experience.

According to a second aspect, an embodiment of this application provides a safety prompt apparatus for a wearable device, including: a first display module, configured to: displaying, in a current device in a plurality of message reminder manners when a safety prompt message corresponding to a wearable device associated with the current device is obtained, a touch point corresponding to the safety prompt message, where the message reminder manners include at least two of the following manners: an AOD interface reminder, a capsule reminder, an in-capsule notification reminder, a message center reminder, a scenario card reminder, and an associated device reminder; and a first processing module, configured to process the safety prompt message in response to a trigger operation on a target touch point, where the target touch point is any touch point.

In a possible implementation of the second aspect, the safety prompt message includes at least one of a location reminder message and a missed call reminder message.

Optionally, in another possible implementation of the second aspect, the safety prompt message is the location reminder message, and a display region corresponding to the target touch point includes a first locating control; and correspondingly, the first processing module includes:
a first starting unit, configured to: start an associated application corresponding to the wearable device in response to a trigger operation on the first locating control, and jump to a locating interface corresponding to the wearable device;
   or
a second starting unit, configured to: start the associated application in response to a trigger operation on another region in the display region corresponding to the target touch point, and jump to a display interface corresponding to the safety prompt message, where the another region refers to a region other than the first locating control in the display region corresponding to the target touch point.

Optionally, in still another possible implementation of the second aspect, the safety prompt message is the location reminder message, and a display region corresponding to the target touch point does not include a first locating control; and correspondingly, the first processing module includes:
a third starting unit, configured to: start an associated application corresponding to the wearable device in response to a trigger operation on the display region corresponding to the target touch point, and jump to a locating interface corresponding to the wearable device.

Optionally, in yet another possible implementation of the second aspect, the safety prompt message is the location reminder message; and correspondingly, the first display module includes:
a first determining unit, configured to determine a message type corresponding to the safety prompt message, where the message type includes at least one of "arrived at a specified location", "left a specified location", and "not arrived at a specified location";
a second determining unit, configured to determine, according to the message type corresponding to the safety prompt message, a display effect corresponding to the touch point; and
a first display unit, configured to display, in the current device according to the display effect corresponding to the touch point, the touch point corresponding to the safety prompt message in the plurality of message reminder manners.

Optionally, in yet another possible implementation of the second aspect, the safety prompt message is the missed call reminder message, and a display region corresponding to the target touch point includes at least one of a first callback control and a first locating control; and correspondingly, the first processing module includes:
a first callback unit, configured to: initiate a callback to the wearable device in response to a trigger operation on the first callback control in the display region corresponding to the target touch point, display a call interface with the wearable device, and display, on the call interface, a second locating control corresponding to the wearable device;
   or
a fourth starting unit, configured to: start an associated application corresponding to the wearable device in response to a trigger operation on the first locating control, and jump to a locating interface corresponding to the wearable device;
   or
a fifth starting unit, configured to: start the associated application in response to a trigger operation on another region in the display region corresponding to the target touch point, and jump to a display interface corresponding to the safety prompt message, where the another region refers to a region other than the first callback control and the first locating control in the display region corresponding to the target touch point.

Optionally, in another possible implementation of the first aspect, the safety prompt message is the missed call reminder message, and a display region corresponding to the target touch point does not include a first callback control and a first locating control; and correspondingly, the first processing module includes:
a second callback unit, configured to: initiate a callback to the wearable device in response to a trigger operation on the display region corresponding to the target touch point, display a call interface with the wearable device, and display, on the call interface, a second locating control corresponding to the wearable device.

Optionally, in another possible implementation of the second aspect, the first processing module further includes:
a sixth starting unit, configured to: start the associated application in response to a trigger operation on the second locating control, jump to a locating interface corresponding to the wearable device, and display, on the locating interface, a jump control corresponding to the call interface.

Optionally, in still another possible implementation of the second aspect, the first processing module further includes:
a first jump unit, configured to jump to the call interface in response to a trigger operation on the jump control corresponding to the call interface.

Optionally, in yet another possible implementation of the second aspect, the display interface corresponding to the safety prompt message further includes a second callback control; and correspondingly, the first processing module further includes:
a third callback unit, configured to: initiate a callback to the wearable device in response to a trigger operation on the second callback control, and display a call interface with the wearable device.

Optionally, in yet another possible implementation of the second aspect, the first display module includes:
a third determining unit, configured to determine a device type corresponding to the current device, where the device type includes a called party and a non-called party;
a fourth determining unit, configured to determine, according to the device type corresponding to the current device, a display effect corresponding to the touch point; and
a second display unit, configured to display, in the current device according to the display effect corresponding to the touch point, the touch point corresponding to the safety prompt message in the plurality of message reminder manners.

Optionally, in another possible implementation of the second aspect, the first display module includes:
a fifth determining unit, configured to determine an incoming call type corresponding to the missed call reminder message;
a sixth determining unit, configured to determine, according to the incoming call type corresponding to the missed call reminder message, a display effect corresponding to the touch point; and
a third display unit, configured to display, in the current device according to the display effect corresponding to the touch point, the touch point corresponding to the safety prompt message in the plurality of message reminder manners.

Optionally, in still another possible implementation of the second aspect, a message reminder manner corresponding to the target touch point is the capsule reminder; and correspondingly, the first processing module includes:
a first switching unit, configured to: switch the message reminder manner corresponding to the target touch point to the in-capsule notification reminder in response to the trigger operation on the target touch point, and display the target touch point in the in-capsule notification reminder manner.

Optionally, in yet another possible implementation of the second aspect, the apparatus further includes:
a second display module, configured to display, in the current device, a scenario card corresponding to a safety prompt function of the wearable device, where the scenario card includes an enable control;
a first starting module, configured to: start, in response to a trigger operation on the enable control, the associated application corresponding to the wearable device, and jump to a function enabling interface corresponding to the safety prompt function; and
a second starting module, configured to enable the safety prompt function of the wearable device in the current device in response to a setting operation performed by a user on the function enabling interface.

According to a third aspect, an embodiment of this application provides an electronic device, including: a memory, a processor, and a computer program that is stored in the memory and that is capable of running on the processor, where when the processor executes the computer program, the electronic device implements the foregoing safety prompt method for a wearable device.

According to a fourth aspect, an embodiment of this application provides a computer-readable storage medium, where the computer program is stored in the computer-readable storage medium, and the computer program is executed by an electronic device to implement the foregoing safety prompt method for a wearable device.

According to a fifth aspect, an embodiment of this application provides a computer program product. When the computer program product runs on an electronic device, the electronic device performs the foregoing safety prompt method for a wearable device.

Technical effects achieved in the second aspect, the third aspect, the fourth aspect, and the fifth aspect are similar to the technical effects achieved by corresponding technical means in the first aspect. Details are not described herein again.

### BRIEF DESCRIPTION OF DRAWINGS

To describe the technical solutions in the embodiments of this application more clearly, the following briefly describes the accompanying drawings required for describing the embodiments or the conventional technology. Clearly, the accompanying drawings in the following description show merely some embodiments of this application, and a person of ordinary skill in the art may still derive other drawings from these accompanying drawings without creative efforts.
FIG. 1 is a schematic flowchart of a safety prompt method for a wearable device according to an embodiment of this application;
FIG. 2 is a schematic diagram of an AOD interface of an electronic device according to an embodiment of this application;
FIG. 3 is a schematic diagram of a capsule reminder of an electronic device according to an embodiment of this application;
FIG. 4 is a schematic diagram of an interface of a capsule reminder of another electronic device according to an embodiment of this application;
FIG. 5 is a schematic diagram of an interface of an in-capsule notification reminder of an electronic device according to an embodiment of this application;
FIG. 6 is a schematic diagram of a lock screen interface of an electronic device according to an embodiment of this application;
FIG. 7 is a schematic diagram of a slide-down notification interface of an electronic device according to an embodiment of this application;
FIG. 8 is a schematic diagram of a leftmost home screen interface of an electronic device according to an embodiment of this application;
FIG. 9 is a schematic diagram of a leftmost home screen interface of another electronic device according to an embodiment of this application;
FIG. 10 is a schematic diagram of a main interface of a smartwatch according to an embodiment of this application;
FIG. 11-FIG. 18 are schematic diagrams of a display region corresponding to a location reminder message "left a specified location" according to an embodiment of this application;
FIG. 19-FIG. 26 are schematic diagrams of a display region corresponding to a location reminder message "not arrived at a specified location" according to an embodiment of this application;
FIG. 27-FIG. 35 are schematic diagrams of a display region corresponding to a missed call reminder message according to an embodiment of this application;
FIG. 36-FIG. 37 are schematic diagrams of a scenario card corresponding to enabling a frequent location guard function according to an embodiment of this application;
FIG. 38 is a schematic diagram of a function enabling interface corresponding to a frequent location guard function according to an embodiment of this application;
FIG. 39-FIG. 40 are schematic diagrams of a scenario card corresponding to enabling a school guard function according to an embodiment of this application;
FIG. 41 is a schematic diagram of a function enabling interface corresponding to a school guard function according to an embodiment of this application;
FIG. 42-FIG. 43 are schematic diagrams of a scenario card corresponding to enabling a vacation guard function according to an embodiment of this application;
FIG. 44 is a schematic diagram of a function enabling interface corresponding to a vacation guard function according to an embodiment of this application;
FIG. 45-FIG. 46 are schematic diagrams of a scenario card corresponding to an add emergency contact function according to an embodiment of this application;
FIG. 47 is a schematic diagram of an emergency contact adding interface according to an embodiment of this application;
FIG. 48 is a schematic diagram of a locating interface corresponding to a wearable device according to an embodiment of this application;
FIG. 49 is a schematic diagram of a display interface corresponding to a safety prompt message according to an embodiment of this application;
FIG. 50 is a schematic diagram of a call interface with a wearable device according to an embodiment of this application;
FIG. 51 is a schematic diagram of a display interface corresponding to another safety prompt message according to an embodiment of this application;
FIG. 52 is a schematic diagram of a locating interface corresponding to still another wearable device according to an embodiment of this application;
FIG. 53 is another schematic diagram of a call interface with a wearable device according to an embodiment of this application;
FIG. 54 is a schematic structural diagram of a safety prompt apparatus for a wearable device according to an embodiment of this application; and
FIG. 55 is a schematic structural diagram of an electronic device according to an embodiment of this application.

### DESCRIPTION OF EMBODIMENTS

The following describes in detail, with reference to the accompanying drawings, a safety prompt method and apparatus for a wearable device, an electronic device, a storage medium, and a computer program provided in this application.

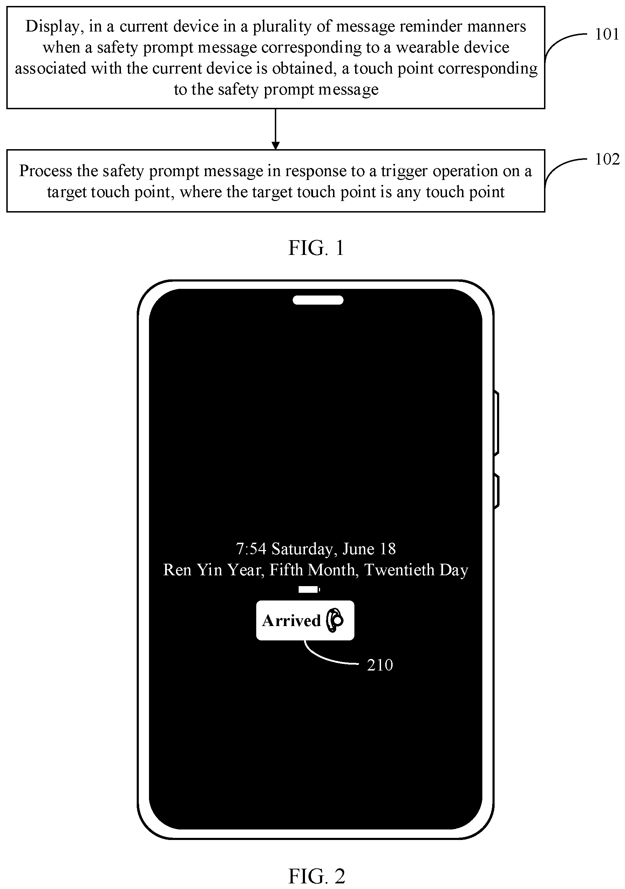

Referring to FIG. 1, FIG. 1 is a schematic flowchart of a safety prompt method for a wearable device according to an embodiment of this application. The method may include a part or all content of the following:
Step 101: Display, in a current device in a plurality of message reminder manners when a safety prompt message corresponding to a wearable device associated with the current device is obtained, a touch point corresponding to the safety prompt message.

It should be noted that, for a wearable device worn by a child, such as a child phone watch or a band, a user generally hopes to obtain, by using the wearable device, safety prompt information such as a location, a travel track, and an emergency call of the child, and receive the safety prompt information by using an electronic device (such as a mobile phone, a smartwatch, or a tablet computer) used by the user. A child phone watch is used as an example. Because a client of the child phone watch is relatively independent, and cannot be integrated with a system of a parent device, a safety prompt message is pushed only in an application notification push manner. A user of the parent device generally cannot learn of and view the safety prompt message in a timely manner. Therefore, more safe information delivery experience cannot be achieved. The following content in this embodiment of this application specifically describes this embodiment of this application by using an example in which the wearable device is a child phone watch, and the parent device is a mobile phone. However, types of the wearable device and a device that receives the safety prompt information of the wearable device are not limited thereto. This embodiment of this application sets no limitation on the type of the wearable device and the type of the device that receives the safety prompt information of the wearable device.

The current device may be a device that is pre-associated with the wearable device and currently obtains the safety prompt information corresponding to the wearable device. In this embodiment of this application, specific description is made by using an example in which the current device is a mobile phone.

The wearable device may be any type of wearable device, such as a phone watch, a child phone watch, or a band. In this embodiment of this application, specific description is made by using an example in which the wearable device is a child phone watch.

The safety prompt message may include at least one of a location reminder message and a missed call reminder message.

It should be noted that the location reminder message may include a reminder message sent by the wearable device to the current device when the wearable device arrives at a specified location, leaves the specified location, does not arrive at the specified location within a specified time, but is not limited thereto. The missed call reminder message may include a reminder message generated when the current device misses an emergency incoming call, an ordinary incoming call, a video incoming call, or the like of the wearable device, but is not limited thereto. In actual use, a timing at which the location reminder message and the missed call reminder message are generated is related to an actual function of an electronic device and an actual use need of a user. This is not limited in this embodiment of this application.

The message reminder manners may include at least two of the following manners: An AOD interface reminder, a capsule reminder, an in-capsule notification reminder, a message center reminder, a scenario card reminder, and an associated device reminder.

It should be noted that the AOD interface reminder may be a message reminder manner in which a message is displayed on an AOD interface of the electronic device. An AOD state is a display state in which simple specific content such as time, date, a battery level, and a message reminder are displayed in a partial region of a display screen in a case in which an entire display screen is not lit, so that a user can conveniently view the time, the date, the battery level, a notification message, and the like without waking up the display screen when the terminal device sleeps. FIG. 2 is a schematic diagram of an AOD interface of an electronic device according to an embodiment of this application. 210 is a display region corresponding to a safety prompt message displayed in an AOD interface reminder manner.

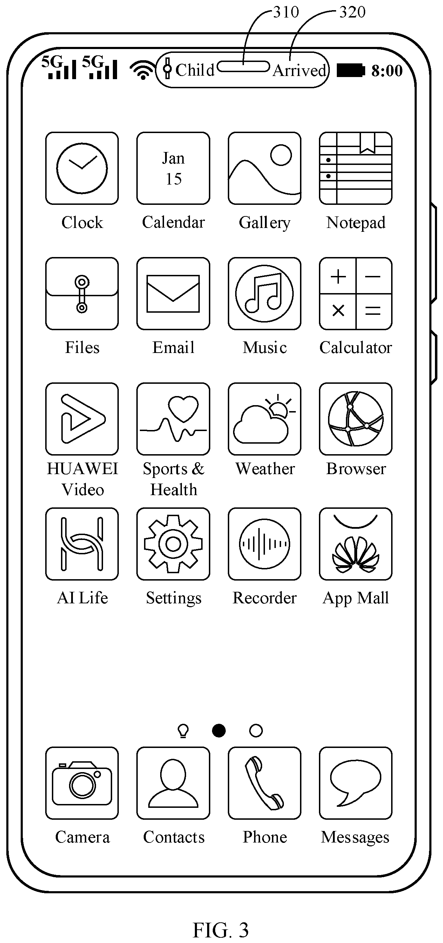

The capsule reminder may be a message reminder manner in which a message is displayed in a form of a capsule around a component such as a camera or a sound outlet hole of the electronic device or another screen part. FIG. 3 is a schematic diagram of an interface of a capsule reminder of an electronic device according to an embodiment of this application. 310 is a screen region in which the camera of the electronic device is located, and cannot display content, and 320 is a display region corresponding to a safety prompt message displayed in a capsule reminder manner. In addition, a page on which an application icon is placed is displayed on an interface of the electronic device. The page may include a plurality of application icons (for example, a weather application icon, a calendar application icon, an album application icon, a notes application icon, an email application icon, an app store application icon, and a settings application icon). A page indicator may be further displayed below the plurality of application icons, to indicate a location relationship between a currently displayed page and another page. A plurality of application icons (for example, a camera application icon, a contacts application icon, a messaging application icon, and a phone application icon) exist below the page indicator. These application icons remain being displayed during page switching.

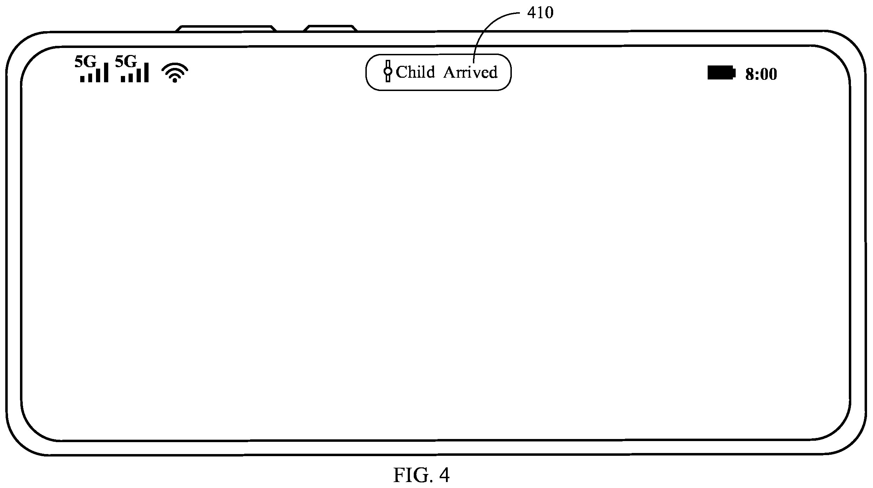

FIG. 4 is a schematic diagram of another interface of a capsule reminder of an electronic device according to an embodiment of this application. 410 is a display region corresponding to a safety prompt message displayed in a capsule reminder manner. It can be seen that the display region 410 does not include a component such as a camera or a sound outlet hole. This capsule reminder manner may be used in a case in which hardware such as a camera or a sound outlet hole is not included in a center at a top of a screen of the electronic device (for example, a tablet computer or a mobile phone whose camera is on a top left corner or a top right corner of a screen), or in a case of landscape display of the electronic device, display may be performed in the capsule reminder manner. It should be noted that manners and locations of capsule display listed in this embodiment of this application are merely examples, and cannot be considered as limitations on this application. In actual use, according to an actual need and a specific application scenario, a display location of the capsule reminder manner may be at a top location of any edge of the screen, or may be at another location of the screen. This is not limited in this embodiment of this application.

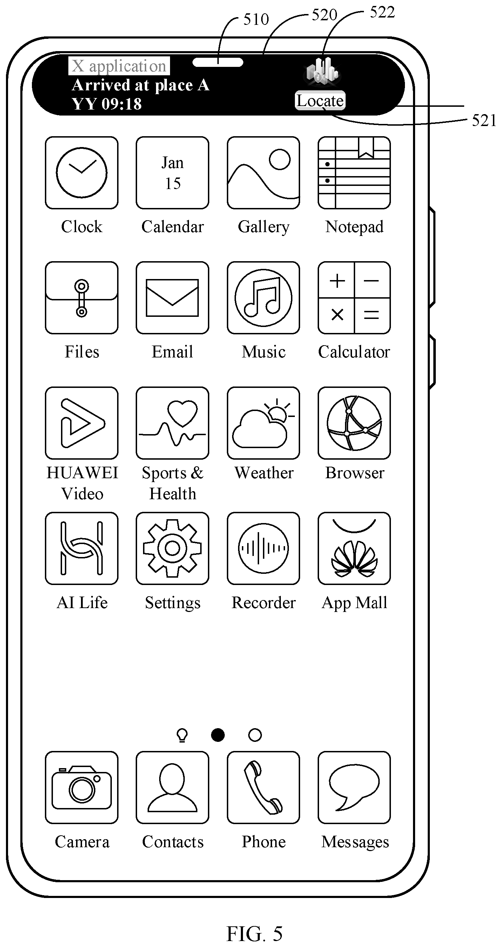

The in-capsule notification reminder may be a message reminder manner of displaying more detailed information of a message in a capsule shape that occupies a relatively large display region around a component such as a camera or a sound outlet hole of the electronic device or another screen part. In an example, compared with the capsule reminder manner, the in-capsule notification reminder manner may occupy a larger display region. A display location of the in-capsule notification reminder manner may be the same as that of the capsule reminder manner. FIG. 5 is a schematic diagram of an interface of an in-capsule notification reminder of an electronic device according to an embodiment of this application. 510 is a screen region in which the camera of the electronic device is located and cannot display content, 520 is a display region corresponding to a safety prompt message displayed in the in-capsule notification reminder manner, and the display region 520 includes an application name "X application" corresponding to the safety reminder message, specific message content "YY (personal name) arrives at a location A at 09:18", a locating control 521, and a material image 522 corresponding to the safety prompt message. It should be noted that the material image corresponding to the safety reminder message may be used to indicate a scenario corresponding to the safety reminder message. For example, the safety reminder message is that the wearable device arrives at a location, leaves a location, or does not arrive at a location. In addition, the display region 520 may include the material image or may not include the material image. This is not limited in this embodiment of this application. In addition, the interface further includes a plurality of other application icons. For details, refer to the introduction in FIG. 3. Details are not described herein again.

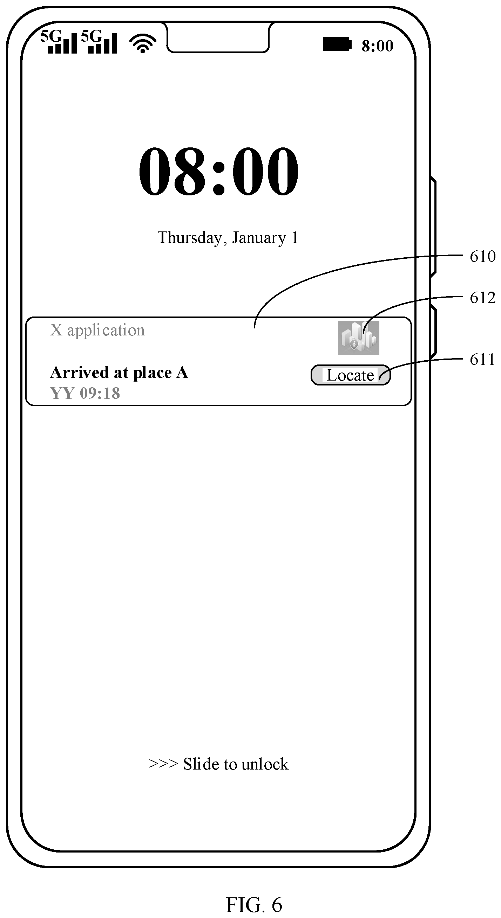

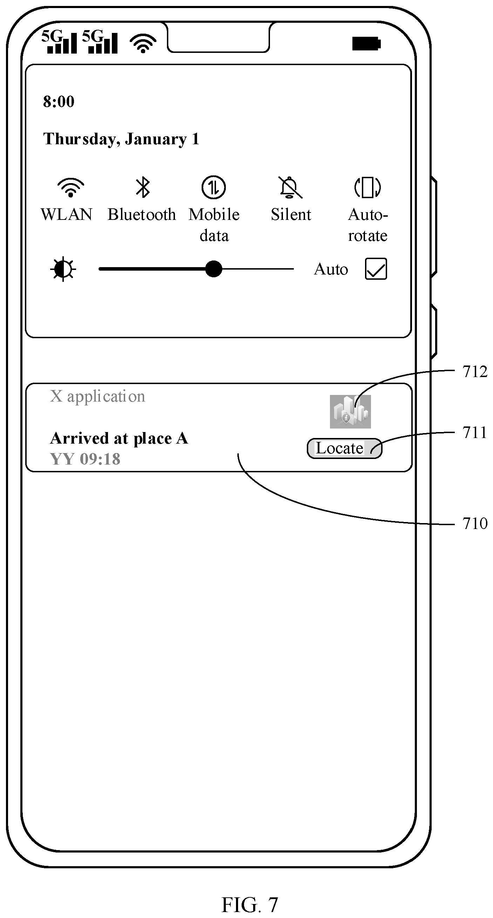

The message center reminder may be a message reminder manner in which an application message reminder is provided by using a message center of the electronic device. FIG. 6 is a schematic diagram of a lock screen interface of an electronic device according to an embodiment of this application. As an example, a safety prompt message may be displayed in the message center reminder manner when the electronic device is in a lock screen state and the screen is on. 610 is a display region corresponding to the safety prompt message displayed in the message center reminder manner, the display region 610 includes an application name "X application" corresponding to the safety prompt message, specific message content "YY arrives at a location A at 09:18", a locating control 611, and a material image 612 corresponding to the safety prompt message. The lock screen interface shown in FIG. 6 further includes icons such as current date, current time, a slide to unlock control, battery level display, and network status display. FIG. 7 is a schematic diagram of a slide-down notification interface of an electronic device according to an embodiment of this application. As an example, after the electronic device turns on the screen and is unlocked, safety prompt information may be displayed in the message center reminder manner on the slide-down notification interface. 710 is a display region corresponding to a safety prompt message displayed in the message center reminder manner, and the display region 710 includes an application name "X application" corresponding to the safety prompt message, specific message content "YY arrives at a location A at 09:18", a locating control 711, and a material image 712 corresponding to the safety prompt message. The slide-down notification interface shown in FIG. 7 further includes icons such as current date, current time, battery level display, network status display, and a plurality of shortcut setting controls (such as Bluetooth, mobile data, and screen auto rotation).

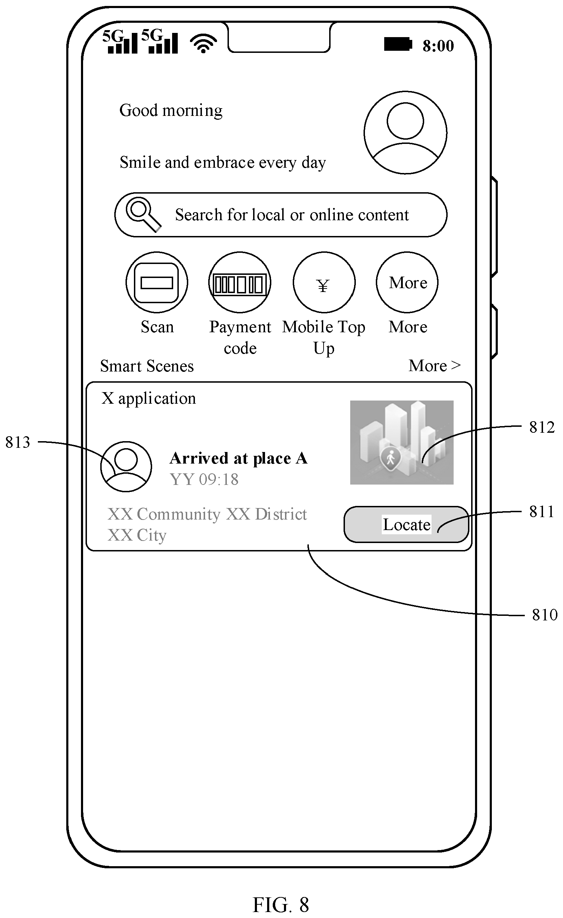

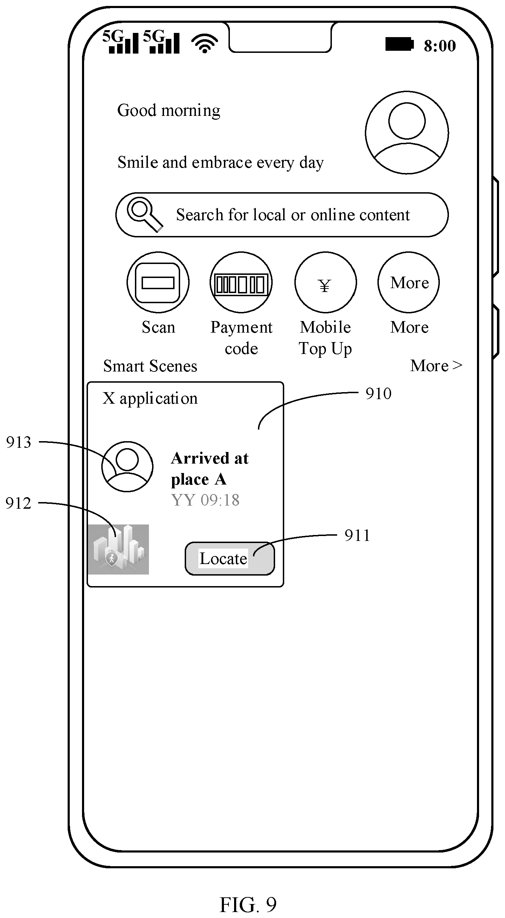

The scenario card reminder may be a message reminder manner in which a message reminder is displayed in a form of a scenario card on a main interface or a leftmost home screen of the electronic device by using a smart recommendation function of the electronic device. As an example, FIG. 8 is a schematic diagram of a leftmost home screen interface of an electronic device according to an embodiment of this application. 810 is a scenario card corresponding to a safety prompt message, and the scenario card 810 includes an application name "X application" corresponding to the safety prompt message, specific message content "YY arrives at a location A at 09:18", a specific address "XX community XX district XX city", a locating control 811, a material image 812 corresponding to the safety prompt message, and a user portrait 813 corresponding to the wearable device. The leftmost home screen interface shown in FIG. 8 further includes icons such as current time, battery level display, network status display, a search control, and a plurality of shortcut controls (such as scan, payment code, and mobile top up). As another example, as shown in FIG. 9, a form of the scenario card in this embodiment of this application may alternatively be a form of a scenario card 910. The scenario card 910 includes an application name "X application" corresponding to a safety prompt message, specific message content "YY arrives at a location A at 09:18", a locating control 911, a material image 912 corresponding to the safety prompt message, and a user portrait 913 corresponding to the wearable device. Other icons included in a leftmost home screen interface shown in FIG. 9 are the same as those in FIG. 8. Details are not described herein again.

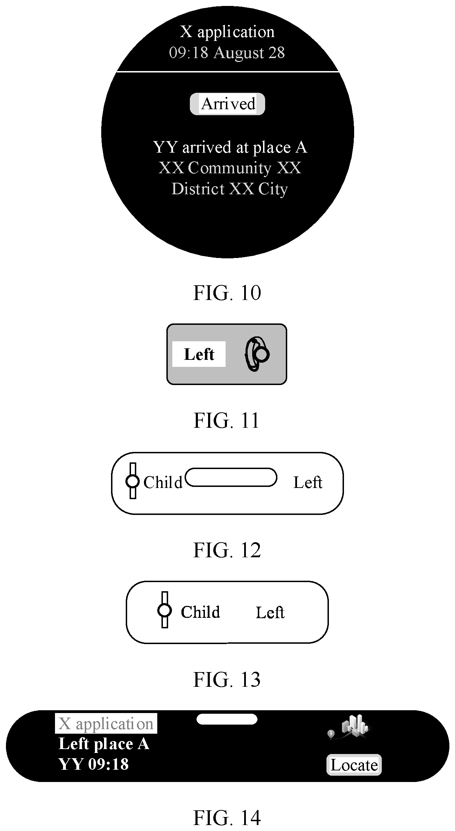

The associated device reminder may be a message reminder manner of displaying a reminder message by using an associated device corresponding to the current device. The associated device may be another device that logs in to a same account as the current device. For example, a message reminder may be displayed by using a smartwatch associated with the current device. As an example, FIG. 10 is a schematic diagram of a main interface of a smartwatch according to an embodiment of this application. The smartwatch is an associated device of the current device, and when the current device obtains a safety prompt message corresponding to the wearable device, the smartwatch may further display the safety prompt message, such as an application name "X application" of an associated application corresponding to the wearable device, specific message content "YY arrives at a location A at 09:18", and a specific address "XX community XX district XX city". Therefore, when the mobile phone of the user is not at hand or the user cannot conveniently view the mobile phone (for example, when the mobile phone is in a pocket or a bag), the user may learn of the safety prompt message in a timely manner by using an associated device such as a smartwatch, and perform timely processing by using the mobile phone.

It should be noted that specific display effects and specific display content corresponding to the foregoing listed various message reminder manners are merely examples, and cannot be considered as limitations on this application. In actual use, specific content that needs to be displayed, and a display effect, a display form, a display color, and the like of display content when the safety prompt message is displayed in each message reminder manner may be determined according to an actual need and a specific application scenario or a user setting, which is not limited in this embodiment of this application.

The touch point corresponding to the safety prompt message may be a display region that is corresponding to the safety reminder message and that may be triggered by the user to process the safety prompt message, for example, the display region 210 in FIG. 2, the display region 320 in FIG. 3, the display region 410 in FIG. 4, the display region 520 in FIG. 5, the display region 610 in FIG. 6, the display region 710 in FIG. 7, the scenario card 810 in FIG. 8, and the scenario card 910 in FIG. 9.

In this embodiment of this application, for example, the wearable device is a child phone watch, and the current device is a parent mobile phone. The user may download and install, in the mobile phone in advance on the parent mobile phone, an associated application or plug-in for managing the child phone watch (the application is used as an example for specific description in the following). Then, a safety prompt function corresponding to the child phone watch may be enabled in the associated application, and a scenario in which a safety prompt needs to be provided is set, so as to generate safety setting information for the child phone watch. Then, the child phone watch may generate a safety prompt message according to the safety setting information of the user in the associated application and actual usage data (for example, location information and a WiFi connection status) of the child phone watch, and send the safety prompt message to the parent mobile phone. When obtaining the safety prompt message, the parent mobile phone may display the safety prompt message in at least two of the foregoing plurality of message reminder manners. Alternatively, when the child phone watch calls the parent mobile phone but no answer is received, it may be determined that a safety prompt message corresponding to the child phone watch, that is, a missed call reminder message, is obtained, and the safety prompt message may be displayed in at least two of the foregoing plurality of message reminder manners.

In a possible implementation, when obtaining the safety prompt message corresponding to the child phone watch, the parent mobile phone may simultaneously display, in message reminder manners of the AOD interface reminder, the capsule reminder, the in-capsule notification reminder, the message center reminder, the scenario card reminder, and the associated device reminder, a touch point corresponding to the safety prompt message, so that the user can learn of the safety prompt message in a timely manner regardless of a use status of the parent mobile phone, and process the safety prompt message in a timely manner, so as to improve safety and timeliness of safety prompt delivery of the wearable device, to ensure child safety as much as possible.

As an example, when the safety prompt message includes a location reminder message, the user may set, in the associated application of the parent mobile phone, a location at which the child phone watch should arrive at a specific time, a location the child phone watch should leave, and the like, and set a geo-fence corresponding to the location, to generate safety setting information corresponding to the child phone watch, so that the child phone watch can determine, according to location information of the child phone watch, whether a real-time location of the child meets the safety setting information, and send a corresponding location reminder message to the parent mobile phone according to a determining result, for example, arrival at a specified location, leave a specified location, or not arrival at a specified location. After obtaining the location reminder message, the parent mobile phone may display the location reminder message in a plurality of message reminder manners.

For example, the safety setting information may include: should be located at a location A from 8:00-4:00 Monday to Friday, so that when determining at about 8:00 Monday to Friday that the location information of the child phone watch is within a geo-fence corresponding to the location A, the child phone watch may determine that the child has arrived at the location A, and may send a location reminder message "arrived at the location A" to the parent mobile phone. If the child phone watch determines at 8:00 Monday to Friday or specific duration later after 8:00 (for example, 5 minutes, 10 minutes, or 15 minutes) that the location information of the child phone watch is not within the geo-fence corresponding to the location A, the child phone watch may determine that the child does not arrive at the location A, and may send a location reminder message "not arrived at the location A" to the parent mobile phone. After the child arrives at the location A, if determining that the location information of the child phone watch is outside the geo-fence corresponding to the location A, the child phone watch may determine that the child leaves the location A, and may send a location reminder message "left the location A" to the parent mobile phone.

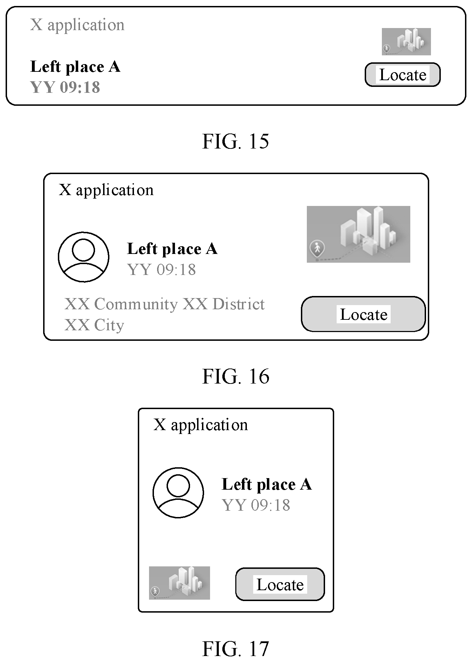

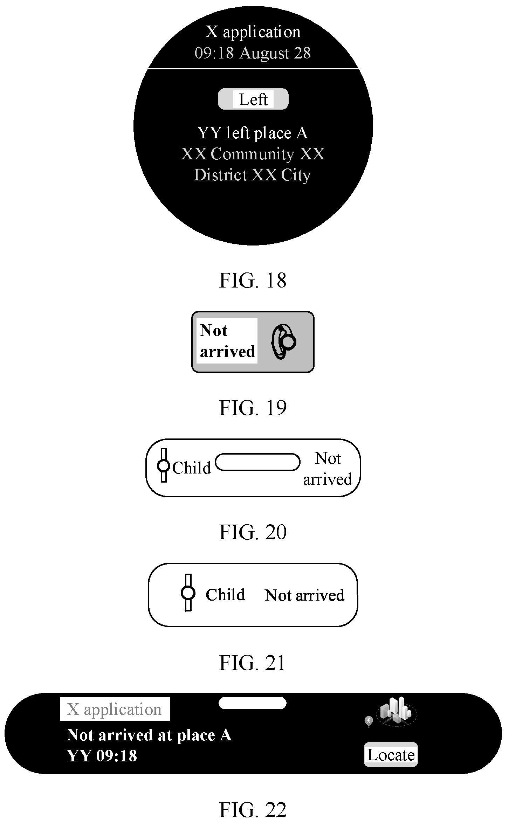

Correspondingly, when obtaining the location reminder message "arrived at the location A" sent by the child phone watch, the parent mobile phone may display, in the plurality of manners shown in FIG. 2-FIG. 10, a touch point corresponding to the location reminder message. If the location reminder message "left the location A" sent by the child phone watch is obtained, a displayed text "arrived" in FIG. 2-FIG. 10 may be changed to a text "left". If the display region includes a material image, the material image may be further changed to a material image corresponding to "left", and other display content remains unchanged. As shown in FIG. 11-FIG. 18, when the location reminder message is "left the location A", when the location reminder message is displayed in the AOD interface reminder manner, a display region (that is, a touch point) corresponding to the location reminder message is shown in FIG. 11; when the location reminder message is displayed in the capsule reminder manner, the display region corresponding to the location reminder message is shown in FIG. 12 or FIG. 13; when the location reminder message is displayed in the in-capsule notification reminder manner, the display region corresponding to the location reminder message is shown in FIG. 14; when the location reminder message is displayed in the message center reminder manner, the display region corresponding to the location reminder message is shown in FIG. 15; when the location reminder message is displayed in the scenario card reminder manner, the display region corresponding to the location reminder message is shown in FIG. 16 or FIG. 17; and when the location reminder message is displayed in the associated device reminder manner, the display region corresponding to the location reminder message is shown in FIG. 18.

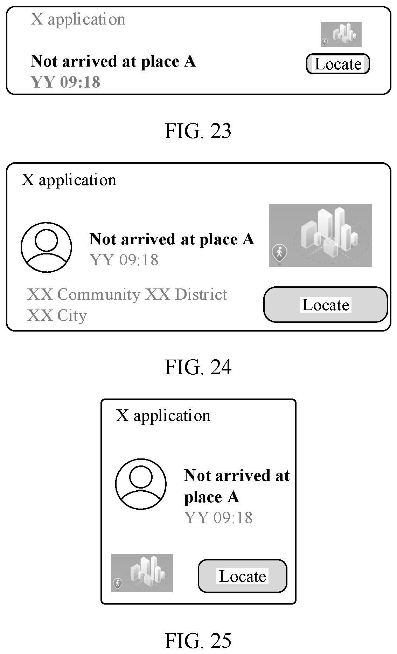

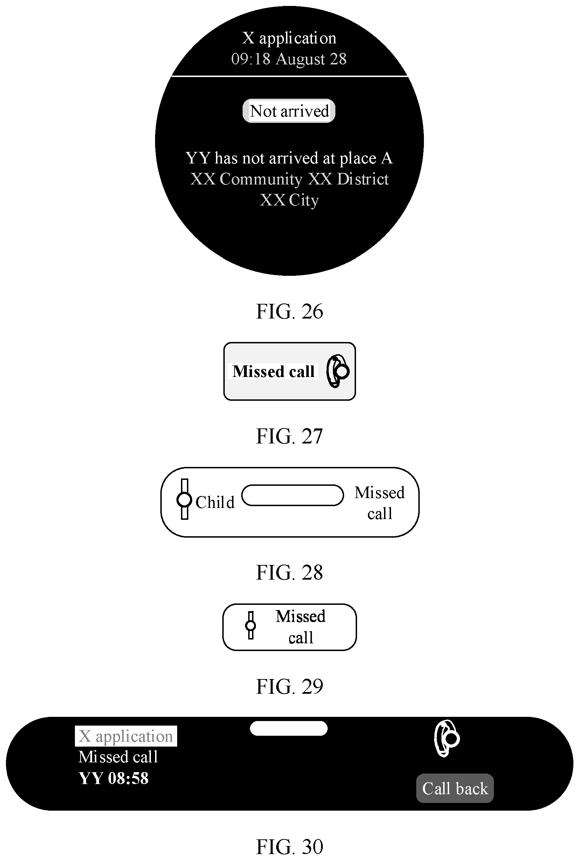

Correspondingly, when obtaining the location reminder message "not arrived at the location A" sent by the child phone watch, the parent mobile phone may also display, in the plurality of manners shown in FIG. 2-FIG. 10, the touch point corresponding to the location reminder message. If the location reminder message "not arrived at the location A" sent by the child phone watch is obtained, the displayed text "arrived" in FIG. 2-FIG. 10 may be changed to the text "not arrived". If the display region includes a material image, the material image may be further modified to a material image corresponding to "not arrived", and other display content remains unchanged. As shown in FIG. 19-FIG. 26, when the location reminder message is "not arrived at the location A", when the location reminder message is displayed in the AOD interface reminder manner, a display region corresponding to the location reminder message is shown in FIG. 19; when the location reminder message is displayed in the capsule reminder manner, the display region corresponding to the location reminder message is shown in FIG. 20 or FIG. 21; when the location reminder message is displayed in the in-capsule notification reminder manner, the display region corresponding to the location reminder message is shown in FIG. 22; when the location reminder message is displayed in the message center reminder manner, the display region corresponding to the location reminder message is shown in FIG. 23; when the location reminder message is displayed in the scenario card reminder manner, the display region corresponding to the location reminder message is shown in FIG. 24 or FIG. 25; and when the location reminder message is displayed in the associated device reminder manner, the display region corresponding to the location reminder message is shown in FIG. 26.

It should be noted that, in actual use, the user may set, according to an actual need, that the child should arrive at a specified location (for example, home, school, paternal grandmother's home, or maternal grandmother's home), and time at which the child should arrive at the specified location. This is not limited in this embodiment of this application.

As an example, the user may further enable a vacation guard function by using the associated application in the parent mobile phone, and set a time period corresponding to a vacation, and WiFi corresponding to a guard location (for example, the guard location may be the home of the user) at which the child should be located in the time period corresponding to the vacation. Therefore, when the child phone watch is connected to the WiFi, the child phone watch may determine that the child is at the guard location, and send a location reminder message "arrived at a guard range" to the parent mobile phone. When a connection between the child phone watch and the WiFi is disconnected, it may be determined that the child left the guard location, and sends a location reminder message "left the guard range" to the parent mobile phone. When obtaining the location reminder message of this type, the parent mobile phone may display the location reminder message in the same manner as the foregoing. Details are not described herein again.

Further, a display effect corresponding to the safety prompt message may be further determined according to a message type of the safety prompt message, so that the user can intuitively understand, according to the display effect of the safety prompt message, a safety status of the user corresponding to the wearable device, so as to process more urgent safety information in a more timely manner. Therefore, not only safety and timeliness of safety prompt delivery of the wearable device are improved, but also a visualization effect and viewing convenience of the safety prompt message are further improved, thereby further improving safety of the user corresponding to the wearable device and user experience. That is, in a possible implementation of this embodiment of this application, the safety prompt message is the location reminder message. Correspondingly, step 101 may include:
determining a message type corresponding to the safety prompt message, where the message type includes at least one of "arrived at a specified location", "left a specified location", and "not arrived at a specified location";
determining, according to the message type corresponding to the safety prompt message, a display effect corresponding to the touch point; and
displaying, in the current device according to the display effect corresponding to the touch point, the touch point corresponding to the safety prompt message in the plurality of message reminder manners.

In a possible implementation, when location reminder messages are respectively "arrived at a specified location", "left the specified location", and "not arrived at the specified location", the three different types of location reminder messages may be respectively displayed by using different display effects. For example, the three different types of location reminder messages may be displayed in different colors. When display regions corresponding to the location reminder messages include material images, different material images may also be used to represent the three different types of location reminder messages, for example, when the location reminder messages are displayed in the in-capsule notification reminder manner, the message center reminder manner, and the scenario card reminder manner, the display regions corresponding to the location reminder messages include material images.

For example, when the location reminder message is "arrived at the specified location", green may be used as a background color of a touch point corresponding to the location reminder message and/or colors of various types of display content (such as a locating control and a material image). When the location reminder message is "left the specified location", blue may be used as a background color of a touch point corresponding to the location reminder message and/or colors of various types of display content. When the location reminder message is "not arrived at the specified location", orange may be used as a background color of a touch point corresponding to the location reminder message and/or colors of various types of display content.

In an example, when the safety prompt message includes a missed call reminder message, if the child phone watch calls the parent device, but the parent mobile phone does not answer, it may be determined that a missed call reminder message corresponding to the child phone watch is obtained, and the missed call reminder message may be displayed in the foregoing plurality of message reminder manners.

It should be noted that an incoming call type of a missed call may include at least one of an emergency incoming call (SOS incoming call), an ordinary incoming call, or a video incoming call, but is not limited thereto. In actual use, a type of an incoming call that requires a safety prompt may be determined according to an actual need and a specific application scenario or a user setting, which is not limited in this embodiment of this application.

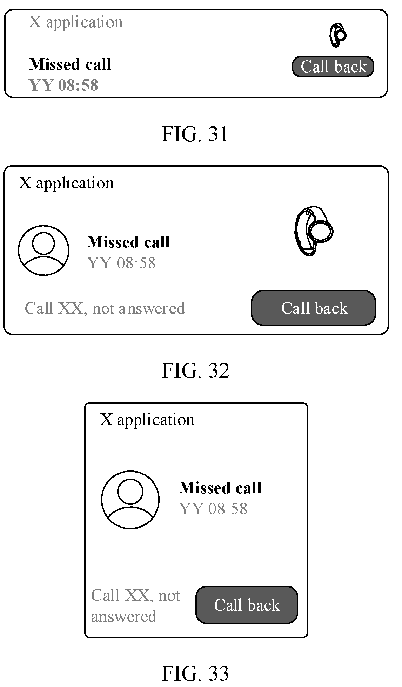

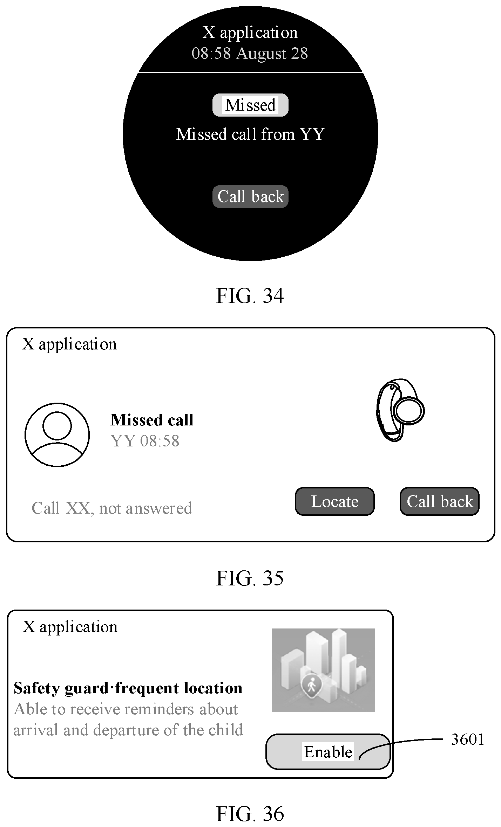

For example, the parent mobile phone may also display the missed call reminder message in a plurality of manners such as the AOD interface reminder, the capsule reminder, the in-capsule notification reminder, the message center reminder, the scenario card reminder, and the associated device reminder when obtaining the missed call reminder message of the child phone watch. As shown in FIG. 27-FIG. 34, when the missed call reminder message is displayed in the AOD interface reminder manner, a display region corresponding to the missed call reminder message is shown in FIG. 27. When the missed call reminder message is displayed in the capsule reminder manner, a display region corresponding to the missed call reminder message is shown in FIG. 28 or FIG. 29. When the missed call reminder message is displayed in the in-capsule notification reminder manner, a display region corresponding to the missed call reminder message is shown in FIG. 30, including an application name "X application" corresponding to an associated application, specific incoming call information "missed call YY 08:58", a callback control, and a watch material image. When the missed call reminder message is displayed in the message center reminder manner, a display region corresponding to the missed call reminder message is shown in FIG. 31, including an application name "X application" corresponding to an associated application, specific incoming call information "missed call YY 08:58", a callback control, and a watch material image. When the missed call reminder message is displayed in the scenario card reminder manner, a display region corresponding to the missed call reminder message is shown in FIG. 32 or FIG. 33. The display region shown in FIG. 32 includes an application name "X application" corresponding to an associated application, specific incoming call information "missed call YY 08:58" and "called XX, no answer", a callback control, and a watch material image. The display region shown in FIG. 33 includes an application name "X application" corresponding to an associated application, specific incoming call information "missed call YY 08:58" and "called XX, no answer", and a callback control. When the missed call reminder message is displayed in the associated device reminder manner, a display region corresponding to the missed call reminder message is shown in FIG. 34. The display region shown in FIG. 34 includes an application name "X application" corresponding to an associated application, specific incoming call information "08:58 August 28" and "missed call from YY", and a callback control.

In a possible implementation, when the missed call reminder is displayed in a message reminder manner with a relatively large display region, a locating control may further be displayed in a touch point corresponding to the missed call reminder, so that the user can choose to call back the child phone watch or locate the child phone watch according to an actual need. For example, when the missed call reminder is displayed in the scenario card reminder manner, both the callback control and the locating control may be displayed in a scenario card corresponding to the missed call reminder, as shown in FIG. 35.

In addition, when the missed call reminder is displayed, a specific incoming call type may be further displayed. For example, when the incoming call type of the missed call reminder is an emergency call, the text "missed call" shown in FIG. 27-FIG. 35 may be changed to "missed emergency call" or "missed SOS", that is, a display interface of a missed call reminder corresponding to the emergency call. When the incoming call type of the missed call reminder is a video phone, the text "missed call" shown in FIG. 27-FIG. 35 may be changed to "missed video call" or "missed video", that is, a display interface of a missed call reminder corresponding to the video call.

It should be noted that the foregoing examples are merely exemplary, and cannot be considered as limitations on this application. In actual use, specific content displayed in a corresponding display region when a missed call reminder is displayed in various message reminder manners may be determined according to an actual need and a specific application scenario, which is not limited in this embodiment of this application.

Further, because emergency degrees of different missed calls are different, a display effect of a missed call reminder message is determined according to an incoming call type of a missed call, so that different emergency degrees are represented by using different display effects, so that a user can intuitively understand emergency of the missed call according to the display effect of the missed call reminder message, and process a more urgent missed call in a more timely manner. Therefore, not only safety and timeliness of safety prompt delivery of the wearable device are improved, but also a visualization effect and viewing convenience of the safety prompt message are further improved, thereby further improving safety of the user corresponding to the wearable device and user experience. That is, in a possible implementation of this embodiment of this application, when the safety prompt message is a missed call reminder message, correspondingly, step 101 may include:
determining an incoming call type corresponding to the missed call reminder message;
determining, according to the incoming call type corresponding to the missed call reminder message, a display effect corresponding to the touch point; and
displaying, in the current device according to the display effect corresponding to the touch point, the touch point corresponding to the safety prompt message in the plurality of message reminder manners.

In a possible implementation, different display effects may be respectively used to display missed call reminder messages of different incoming call types. For example, different colors may be used to display missed call reminder messages of different incoming call types.

For example, when the incoming call type of the missed call reminder message is an emergency incoming call, red may be used as a background color of a touch point corresponding to the missed call reminder message and/or colors of various types of display content (such as a callback control and a locating control). When the incoming call type of the missed call reminder message is a video incoming call, blue may be used as a background color of the touch point corresponding to the missed call reminder message and/or colors of various types of display content.

It should be noted that the foregoing examples are merely exemplary, and cannot be considered as limitations on this application. In actual use, display effects corresponding to incoming call reminder messages of different incoming call types may be determined according to an actual application scenario and a specific use need or a user setting, which is not limited in this embodiment of this application.

Further, because one wearable device may have a plurality of associated users, such as father, mother, and another relative, when a missed call reminder message is displayed, electronic devices of the plurality of associated users of the wearable device may be notified at the same time. However, a called party and a non-called party may display the missed call reminder message by using different display effects, so that the user can intuitively understand emergency of the missed call according to the display effect of the missed call reminder message, and process a more urgent missed call in a more timely manner, preventing unnecessary panic to the non-called user. Therefore, not only safety and timeliness of safety prompt delivery of the wearable device are improved, but also a visualization effect and viewing convenience of the safety prompt message are further improved, thereby further improving safety of the user corresponding to the wearable device and user experience. That is, in a possible implementation of this embodiment of this application, when the safety prompt message is a missed call reminder message, correspondingly, step 101 may include:
determining a device type corresponding to the current device, where the device type includes a called party and a non-called party;
determining, according to the device type corresponding to the current device, a display effect corresponding to the touch point; and
displaying, in the current device according to the display effect corresponding to the touch point, the touch point corresponding to the safety prompt message in the plurality of message reminder manners.

In a possible implementation, when the child phone watch is associated with a plurality of users, if a user receives an incoming call from the child phone watch and does not answer the call, the missed call reminder message may be separately synchronized to a mobile phone of each user associated with the child phone watch. Therefore, to enable the called-end user to understand emergency of the missed call reminder message, so as to process the missed call reminder message in a timely manner, and prevent unnecessary panic emotion to another non-called-end user, the called party and the non-called party may display the missed call reminder message by using different display effects.

As an example, the called party and the non-called party may display the missed call reminder message in different colors. For example, when the current device is the called party, red may be used as a background color of a touch point corresponding to the missed call reminder message and/or colors of various types of display content (such as a callback control or a locating control). When the current device is the non-called party, orange may be used as a background color of the touch point corresponding to the missed call reminder message and/or colors of various types of display content.

As an example, the called party and the non-called party may display different controls in addition to displaying the missed call reminder message in different colors. For example, when the current device is the called party, red may be used as a background color of a touch point corresponding to the missed call reminder message and/or colors of various types of display content, and a callback control is displayed in the touch point corresponding to the missed call reminder message, as shown in FIG. 27-FIG. 34. Alternatively, red may be used as the background color of the touch point corresponding to the missed call reminder message and/or colors of various types of display content, and a callback control and a locating control are simultaneously displayed in the touch point corresponding to the missed call reminder message, as shown in FIG. 35. When the current device is the non-called party, the user of the current device generally does not have a callback need. Therefore, orange may be used as a background color of a touch point corresponding to the missed call reminder message and/or colors of various types of display content, and only a locating control is displayed in the touch point corresponding to the missed call reminder message. That is, the callback control displayed on the interfaces shown in FIG. 27-FIG. 34 is changed to the locating control, and then a display effect of displaying the missed call reminder on the non-called party is presented.

It should be noted that the foregoing examples are merely exemplary, and cannot be considered as limitations on this application. In actual use, display effects of displaying incoming call reminder messages by devices of different device types may be determined according to an actual application scenario and a specific use need or a user setting, which is not limited in this embodiment of this application.

Further, the user may be further reminded, in the scenario card manner, to enable the safety prompt function of the wearable device, so that the user can enable the safety prompt function of the wearable device in a timely and convenient manner. Therefore, not only safety and timeliness of safety prompt delivery of the wearable device are improved, but also convenience of enabling the safety prompt function is further improved, further improving user experience. To be specific, in a possible implementation of this embodiment of this application, before the foregoing step 101, the method may further include:
displaying, in the current device, a scenario card corresponding to a safety prompt function of the wearable device, where the scenario card includes an enable control;
starting, in response to a trigger operation on the enable control, the associated application corresponding to the wearable device, and jumping to a function enabling interface corresponding to the safety prompt function; and
enabling the safety prompt function of the wearable device in the current device in response to a setting operation performed by a user on the function enabling interface.

In a possible implementation, the safety prompt function corresponding to the wearable device may include at least one of a safety guard prompt function and a missed call prompt function. In addition, the safety guard prompt function may further include a plurality of different types of guard types, such as frequent location guard, school guard, and vacation guard. The missed call prompt function may include guard types such as an emergency call reminder, an ordinary incoming call reminder, and a video call reminder. The emergency incoming call reminder type may allow the user to set an emergency contact, so that the wearable device can quickly initiate an emergency call to the emergency contact by using a shortcut key.

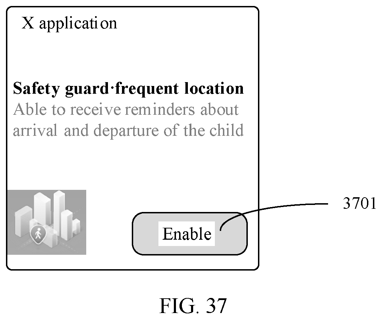

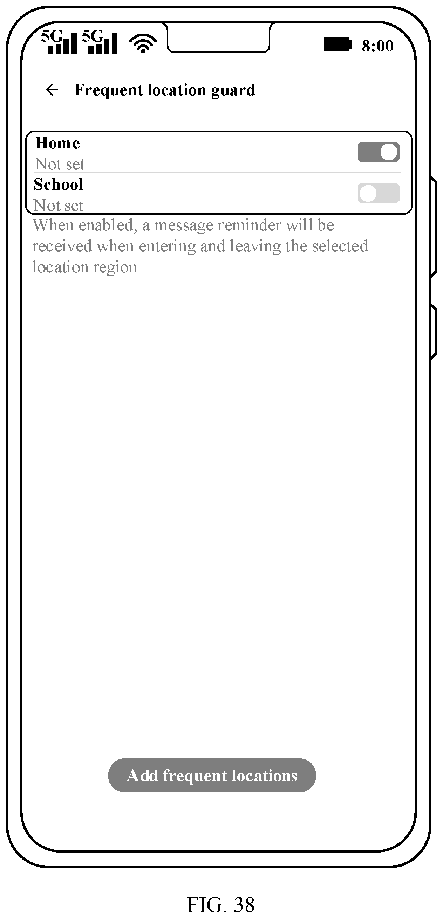

For example, FIG. 36 and FIG. 37 are schematic diagrams of a scenario card corresponding to enabling a frequent location guard function according to an embodiment of this application (in actual use, one of the schematic diagrams may be selected for display according to a size of actual display space on a display interface in which the scenario card is located). The scenario card shown in FIG. 36 includes an enable control 3601, an application name "X application" of an associated application corresponding to the child phone watch, specific information of the frequent location guard function "Safety guard Frequent location Able to receive reminders about arrival and departure of the child", and a material image corresponding to the frequent location guard function. The scenario card shown in FIG. 37 includes an enable control 3701, an application name "X application" of an associated application corresponding to the child phone watch, specific information of the frequent location guard function "Safety guard Frequent location Able to receive reminders about arrival and departure of the child", and a material image corresponding to the frequent location guard function. If a trigger operation on the enable control 3601 or the enable control 3701 is obtained, the associated application corresponding to the child phone watch may be started, and a function enabling interface corresponding to the safety prompt function may be jumped to, that is, a function enabling interface corresponding to the frequent location guard, as shown in FIG. 38. If a setting operation of the user on a frequent location guard function enabling interface shown in FIG. 38 is obtained, the frequent location guard function corresponding to the child phone watch may be enabled in the current device according to the setting operation of the user.

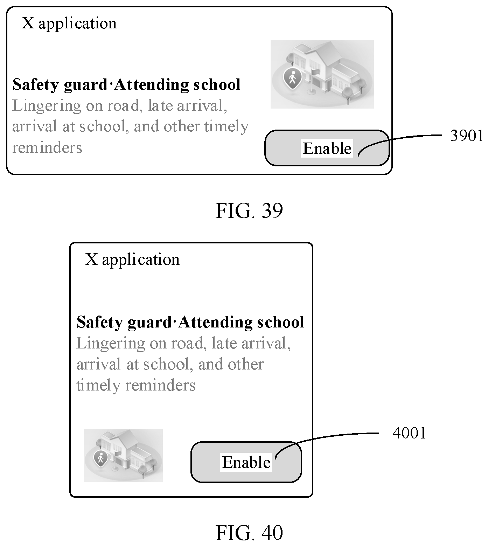

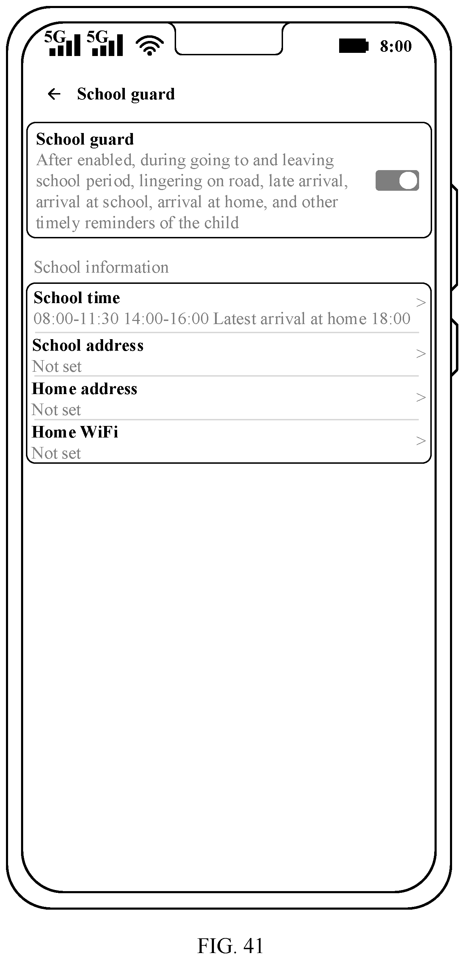

For another example, FIG. 39 and FIG. 40 are schematic diagrams of a scenario card corresponding to enabling a school guard function according to an embodiment of this application (in actual use, one of the schematic diagrams may be selected for display according to a size of actual display space on a display interface in which the scenario card is located). The scenario card shown in FIG. 39 includes an enable control 3901, an application name "X application" of an associated application corresponding to the child phone watch, specific information of a school guard function "Safety guard Attending school Lingering on road, late arrival, arrival at school, and other timely reminders", and a material image corresponding to the school guard function. The scenario card shown in FIG. 40 includes an enable control 4001, an application name "X application" of an associated application corresponding to the child phone watch, specific information of a school guard function "Safety guard Attending school Lingering on road, late arrival, arrival at school, and other timely reminders", and a material image corresponding to the school guard function. If a trigger operation on the enable control 3901 or the enable control 4001 is obtained, the associated application corresponding to the child phone watch may be started, and a function enabling interface corresponding to the safety prompt function may be jumped to, that is, a function enabling interface corresponding to the school guard, as shown in FIG. 41. If a setting operation of the user on a school guard function enabling interface shown in FIG. 41 is obtained, the school guard function corresponding to the child phone watch may be enabled in the current device according to the setting operation of the user.

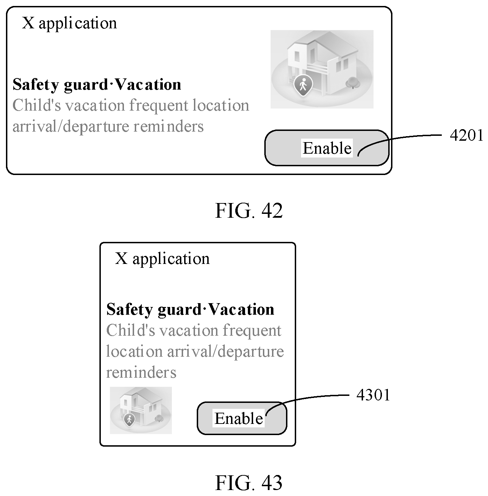

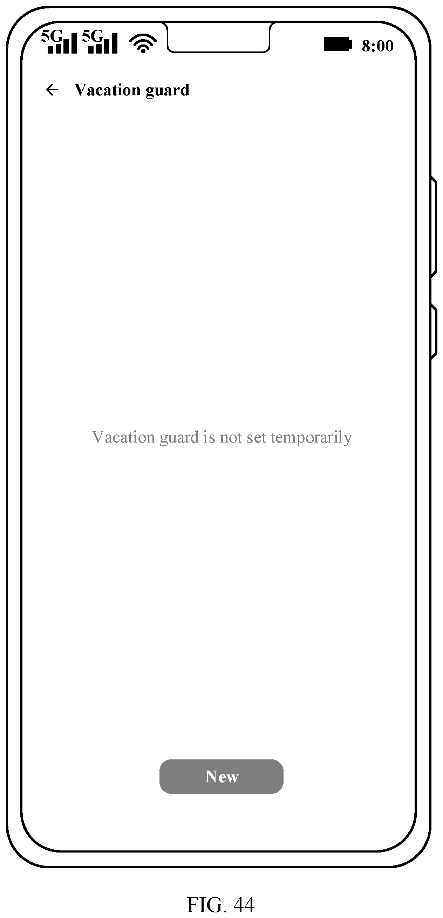

For another example, FIG. 42 and FIG. 43 are schematic diagrams of a scenario card corresponding to enabling a vacation guard function according to an embodiment of this application (in actual use, one of the schematic diagrams may be selected for display according to a size of actual display space on a display interface in which the scenario card is located). The scenario card shown in FIG. 42 includes an enable control 4201, an application name "X application" of an associated application corresponding to the child phone watch, specific information of a vacation guard function "Safety guard Vacation Child's vacation frequent location arrival/departure reminders", and a material image corresponding to the vacation guard function. The scenario card shown in FIG. 43 includes an enable control 4301, an application name "X application" of an associated application corresponding to the child phone watch, specific information of a vacation guard function "Safety guard Vacation Child's vacation frequent location arrival/departure reminders", and a material image corresponding to the vacation guard function. If a trigger operation on the enable control 4201 or the enable control 4301 is obtained, the associated application corresponding to the child phone watch may be started, and a function enabling interface corresponding to the safety prompt function may be jumped to, that is, a function enabling interface corresponding to the vacation guard, as shown in FIG. 44. If a setting operation of the user on a vacation guard function enabling interface shown in FIG. 44 is obtained, the vacation guard function corresponding to the child phone watch may be enabled in the current device according to the setting operation of the user.

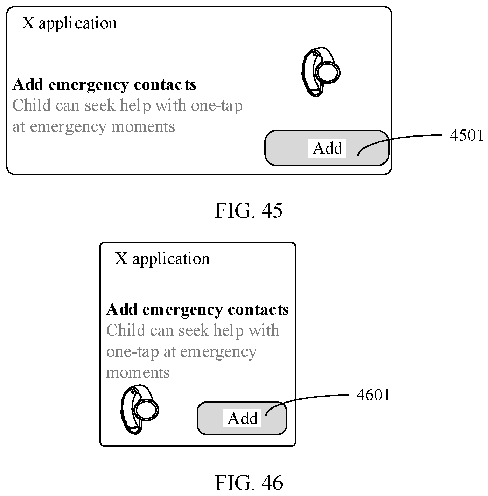

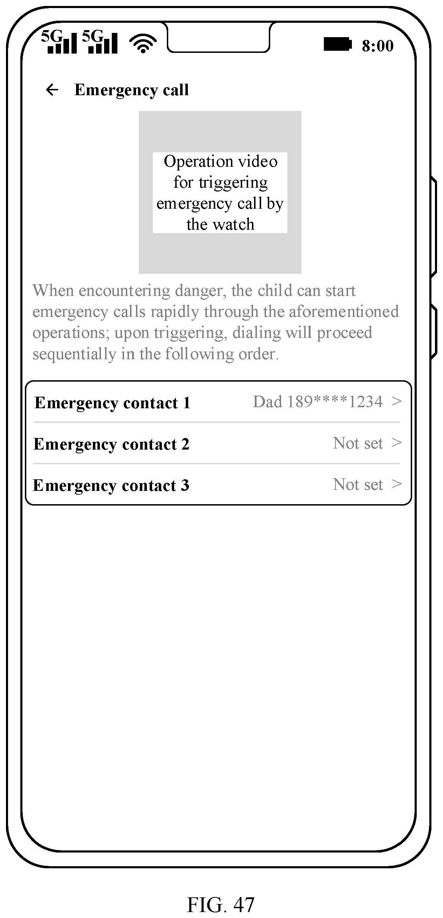

For another example, FIG. 45 and FIG. 46 are schematic diagrams of a scenario card corresponding to an emergency contact adding function according to an embodiment of this application (in actual use, one of the schematic diagrams may be selected for display according to a size of actual display space on a display interface in which the scenario card is located). The scenario card shown in FIG. 45 includes an adding control 4501, an application name "X application" of an associated application corresponding to the child phone watch, specific information of the emergency contact adding function, "Add emergency contacts Child can seek help with one-tap at emergency moments", and a material image corresponding to adding an emergency contact. The scenario card shown in FIG. 46 includes an adding control 4601, an application name "X application" of an associated application corresponding to the child phone watch, specific information of the emergency contact adding function, "Add emergency contacts Child can seek help with one-tap at emergency moments", and a material image corresponding to adding an emergency contact. If a trigger operation on the adding control 4501 or the enabling control 4601 is obtained, the associated application corresponding to the child phone watch may be started, and a function enabling interface corresponding to the safety prompt function, that is, an emergency contact adding interface, may be jumped to, as shown in FIG. 47. If a setting operation of the user on the emergency contact adding interface shown in FIG. 47 is obtained, an emergency contact corresponding to the child phone watch may be added to the current device according to the setting operation of the user, and sent to the child phone watch.

It should be noted that the foregoing examples are merely exemplary, and cannot be considered as limitations on this application. In actual use, a display effect and display content of a scenario card corresponding to the safety prompt function may be determined according to an actual application scenario and a specific use need. This is not limited in this embodiment of this application.

Step 102: Process the safety prompt message in response to a trigger operation on a target touch point, where the target touch point is any touch point.

In this embodiment of this application, after the touch point corresponding to the safety prompt message is displayed in a plurality of message reminder manners in the current device, the user may choose, according to an actual usage need, to trigger any touch point to process the safety prompt message. Therefore, when a trigger operation performed by the user on any touch point is obtained, the touch point may be used as the target touch point, and corresponding processing is performed on the safety prompt message according to the trigger operation performed by the user on the target touch point.

Further, when the location information reminder message is displayed, for a message reminder manner in which a display region is relatively small, the user can directly touch, by triggering the display region of the safety prompt message, a locating interface corresponding to the wearable device to view location information of the wearable device in a timely manner, thereby improving not only safety and timeliness of safety prompt delivery of the wearable device, but further improving convenience of viewing and processing the safety prompt message, further improving user experience. That is, in a possible implementation of this embodiment of this application, the safety prompt message is the location reminder message, and a display region corresponding to the target touch point does not include a first locating control. Correspondingly, step 102 may include:
starting an associated application corresponding to the wearable device in response to a trigger operation on the display region corresponding to the target touch point, and jumping to a locating interface corresponding to the wearable device.

In a possible implementation, because a display region corresponding to a message reminder manner such as the AOD interface reminder manner or the capsule reminder manner is relatively small, an excessive quantity of controls cannot be displayed. Therefore, for such a message reminder manner, a locating interface of an associated application of the wearable device may be jumped to by triggering any location of a display region corresponding to a touch point, so as to display real-time locating data of the wearable device. Therefore, if the display region corresponding to the target touch point does not include the first locating control, for example, when the target touch point is a touch point displayed in the AOD interface reminder manner or the capsule reminder manner, the associated application corresponding to the wearable device may be started according to a trigger operation performed by the user at any location of the display region corresponding to the target touch point, and a locating interface corresponding to the wearable device is jumped to, so as to display real-time locating data of the wearable device.

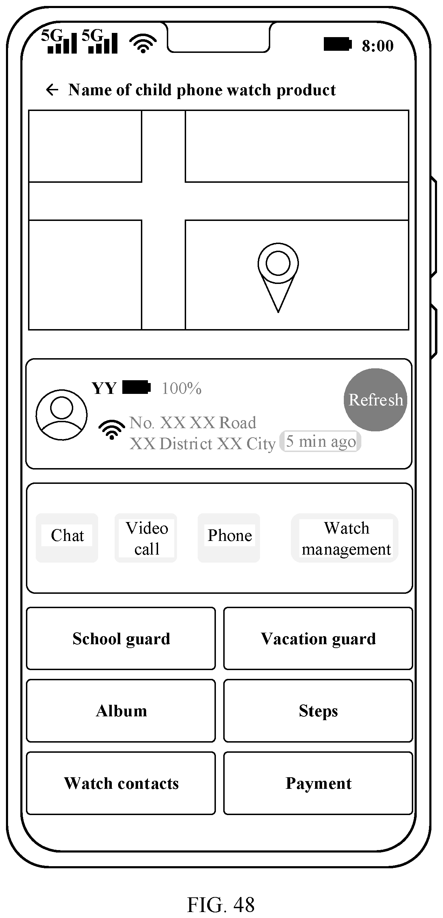

For example, the wearable device is a child phone watch, and when a trigger operation of the user on the touch point 210 in FIG. 2, the touch point 320 in FIG. 3, or the touch point 410 in FIG. 4 is obtained, a locating interface corresponding to the child phone watch shown in FIG. 48 may be jumped to.

It should be noted that the foregoing examples are merely exemplary, and cannot be considered as limitations on this application. In actual use, a display effect and display content of the locating interface corresponding to the wearable device may be determined according to an actual application scenario and a specific use need. This is not limited in this embodiment of this application.

Further, when the location information reminder message is displayed, a locating control may be provided at a corresponding touch point, so that the user can directly reach, by using the locating control, a locating interface corresponding to the wearable device, and view location information of the wearable device in a timely manner, so that the user can directly open, by using another region in the display region, an associated application corresponding to the wearable device, so as to display the safety prompt message in the associated application, thereby improving not only safety and timeliness of safety prompt delivery of the wearable device, but further improving convenience of viewing and processing the safety prompt message, further improving user experience. That is, in a possible implementation of this embodiment of this application, the safety prompt message is the location reminder message, and a display region corresponding to the target touch point includes a first locating control. Correspondingly, step 102 may include:
starting an associated application corresponding to the wearable device in response to a trigger operation on the first locating control, and jumping to a locating interface corresponding to the wearable device;
   or
starting the associated application in response to a trigger operation on another region in the display region corresponding to the target touch point, and jumping to a display interface corresponding to the safety prompt message, where the another region refers to a region other than the first locating control in the display region corresponding to the target touch point.

In a possible implementation, for a message reminder manner including a locating control such as the in-capsule message reminder, the message center reminder, or the scenario card reminder, a locating interface of an associated application of the wearable device may be jumped to by triggering a locating control corresponding to a touch point, so as to display real-time locating data of the wearable device. The display interface corresponding to the safety prompt message may be jumped to by triggering another region different from the locating control in the display region corresponding to the touch point. Therefore, when the display region corresponding to the target touch point includes the first locating control, if the target touch point is a touch point displayed in the manner of the in-capsule message reminder, the message center reminder, or the scenario card reminder, if a trigger operation of the user on the first locating control corresponding to the target touch point is obtained, the associated application corresponding to the wearable device may be started according to the trigger operation of the user on the first locating control, and the locating interface corresponding to the wearable device is jumped to, so as to display real-time locating data of the wearable device. If a trigger operation of the user on another region different from the first locating control in the display region corresponding to the target touch point is obtained, the associated application corresponding to the wearable device may be started according to the trigger operation of the user on the another region, and the display interface corresponding to the safety prompt message is jumped, so as to display the safety prompt message inside the associated application.

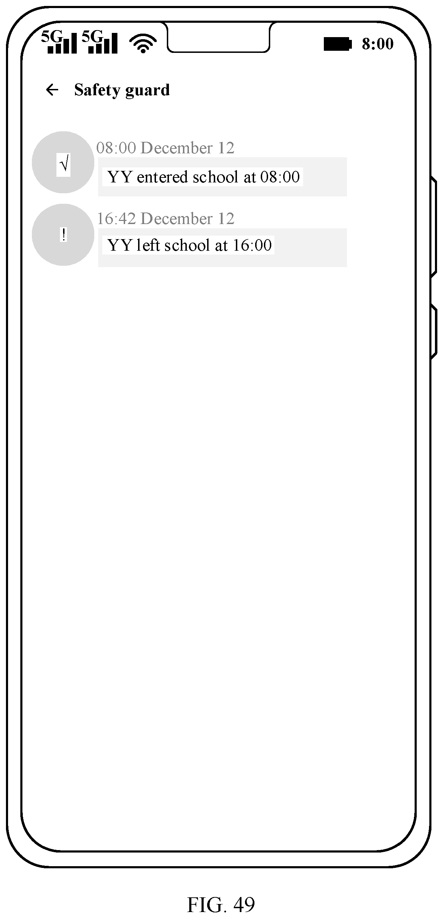

For example, the wearable device is a child phone watch, and when a trigger operation of the user on the first locating control 521 in FIG. 5, the first locating control 611 in FIG. 6, the first locating control 711 in FIG. 7, the first locating control 811 in FIG. 8, or the first locating control 911 in FIG. 9 is obtained, the locating interface corresponding to the child phone watch shown in FIG. 48 may be jumped to. After a trigger operation of the user on another region in a display region corresponding to any touch point in FIG. 5-FIG. 9 is obtained, the display interface corresponding to the safety prompt message shown in FIG. 49 may be jumped to.

It should be noted that the foregoing examples are merely exemplary, and cannot be considered as limitations on this application. In actual use, a display effect and display content of the display interface corresponding to the safety prompt message may be determined according to an actual application scenario and a specific use need. This is not limited in this embodiment of this application.

Further, when a missed call reminder message is displayed, for a message reminder manner in which a display region is relatively small, the user may directly call back the wearable device by triggering the display region of the safety prompt message, thereby improving not only safety and timeliness of safety prompt delivery of the wearable device, but further improving convenience of viewing and processing the safety prompt message, further improving user experience. That is, in a possible implementation of this embodiment of this application, the safety prompt message is the missed call reminder message, and the display region corresponding to the target touch point does not include the first callback control and the first locating control. Correspondingly, step 102 may include:
initiating a callback to the wearable device in response to a trigger operation on the display region corresponding to the target touch point, displaying a call interface with the wearable device, and displaying, on the call interface, a second locating control corresponding to the wearable device.

In a possible implementation, because a display region corresponding to a message reminder manner such as the AOD interface reminder manner or the capsule reminder manner is relatively small, an excessive quantity of controls cannot be displayed. Therefore, for such a message reminder manner, the wearable device may be called back by triggering any location of a display region corresponding to a touch point. Therefore, if the display region corresponding to the target touch point does not include the first callback control, that is, the first locating control, when the target touch point is a touch point displayed in a manner of the AOD interface reminder or the capsule reminder, the wearable device may be called back according to a trigger operation of the user at any location of the display region corresponding to the target touch point, a call interface with the wearable device is displayed, and a second locating control corresponding to the wearable device is displayed on the call interface.

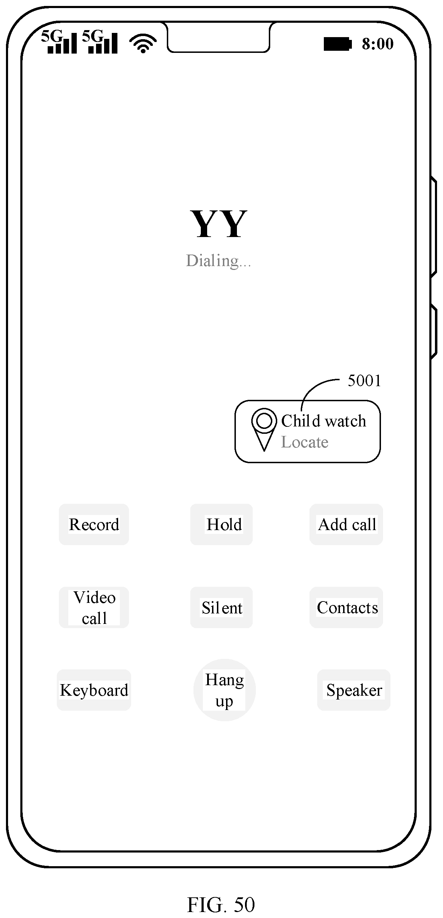

For example, the wearable device is a child phone watch. When a trigger operation of the user on the display region shown in FIG. 27, FIG. 28, or FIG. 29 is obtained, a call interface with the child phone watch shown in FIG. 50 may be jumped to, where the call interface may include a second locating control 5001, and the second locating control 5001 may be displayed on the call interface in a floating manner, and may be freely slid on the call interface.

It may be understood that if an incoming call type corresponding to the missed call reminder message is a video call, after the wearable device is called back, a video call interface may be switched to, and the video call interface may not include the second locating control.

It should be noted that the foregoing examples are merely exemplary, and cannot be considered as limitations on this application. In actual use, a display effect and display content of the locating interface corresponding to the wearable device may be determined according to an actual application scenario and a specific use need. This is not limited in this embodiment of this application.

Further, when a missed call reminder message is displayed, a callback control and/or a locating control are provided in a corresponding touch point, so that the user can directly call back the wearable device by using the callback control, or the user can directly reach, by using the locating control, the locating interface corresponding to the wearable device, and view location information of the wearable device in a timely manner, so that the user can directly open, by using another region in the display region, an associated application corresponding to the wearable device, so as to display the safety prompt message in the associated application, thereby improving not only safety and timeliness of safety prompt delivery of the wearable device, but further improving convenience of viewing and processing the safety prompt message, further improving user experience. That is, in a possible implementation of this embodiment of this application, the safety prompt message is the missed call reminder message, and the display region corresponding to the target touch point includes at least one of the first callback control and the first locating control. Correspondingly, step 102 may include:
initiating a callback to the wearable device in response to a trigger operation on the first callback control in the display region corresponding to the target touch point, displaying a call interface with the wearable device, and displaying, on the call interface, a second locating control corresponding to the wearable device;
   or
starting an associated application corresponding to the wearable device in response to a trigger operation on the first locating control, and jumping to a locating interface corresponding to the wearable device;
   or
starting the associated application in response to a trigger operation on another region in the display region corresponding to the target touch point, and jumping to a display interface corresponding to the safety prompt message, where the another region refers to a region other than the first callback control and the first locating control in the display region corresponding to the target touch point.

In a possible implementation, for a message reminder manner that includes a callback control and/or a locating control, such as the in-capsule message reminder, the message center reminder, the scenario card reminder, and the associated device reminder, a callback control corresponding to a touch point may be triggered to call back the wearable device, and a locating control corresponding to the touch point may be triggered to jump to a locating interface of an associated application of the wearable device, so as to display real-time locating data of the wearable device. The display interface corresponding to the safety prompt message may be jumped to by triggering another region different from the locating control and the callback control in the display region corresponding to the touch point. Therefore, when the display region corresponding to the target touch point includes only the first callback control or includes both the first callback control and the first locating control, if the target touch point is a touch point displayed in a manner of the in-capsule message reminder, the message center reminder, the scenario card reminder, or the associated device reminder manner, if a trigger operation of the user on the first callback control corresponding to the target touch point is obtained, the wearable device may be called back according to the trigger operation of the user on the first callback control, a call interface with the wearable device is displayed, and the second locating control corresponding to the wearable device is displayed on the call interface. Alternatively, when the display region corresponding to the target touch point includes only the first locating control or includes both the first callback control and the first locating control, if the target touch point is a touch point displayed in a manner of the in-capsule message reminder, the message center reminder, the scenario card reminder, or the associated device reminder, if a trigger operation of the user on the first locating control corresponding to the target touch point is obtained, an associated application corresponding to the wearable device may be started according to the trigger operation of the user on the first locating control, and the locating interface corresponding to the wearable device may be jumped, so as to display real-time locating data of the wearable device. If a trigger operation of the user on another region different from the first callback control and the first locating control in the display region corresponding to the target touch point, the associated application corresponding to the wearable device may be started according to the trigger operation of the user on the another region, and the display interface corresponding to the safety prompt message is jumped to, so as to display the safety prompt message inside the associated application.

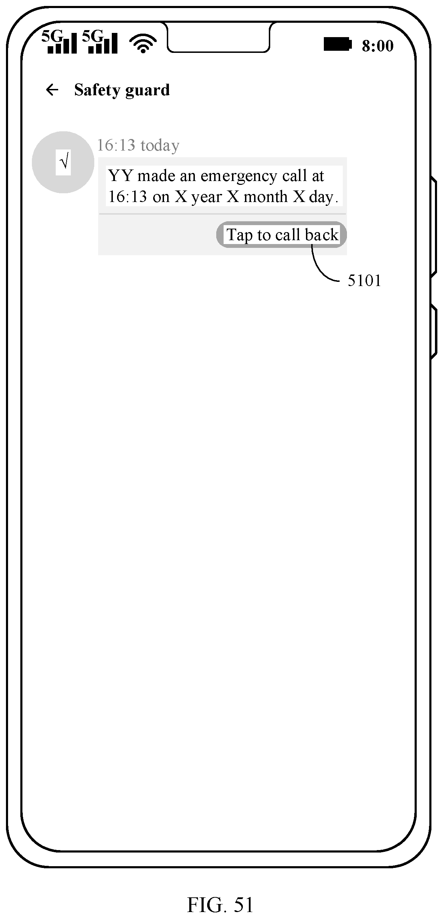

For example, the wearable device is a child phone watch. When a trigger operation of the user on the callback control in FIG. 30, FIG. 31, FIG. 32, FIG. 33, FIG. 34, or FIG. 35, a call interface with the child phone watch shown in FIG. 50 may be jumped to. When a trigger operation of the user on the locating control in FIG. 35, the locating interface corresponding to the child phone watch shown in FIG. 48 may be jumped to. After a trigger operation of the user on another region in the display region corresponding to any one touch point in FIG. 30-FIG. 35 is obtained, the display interface corresponding to the safety prompt message shown in FIG. 51 may be jumped to, where the display interface may include a second callback control 5101.

It should be noted that the foregoing examples are merely exemplary, and cannot be considered as limitations on this application. In actual use, a display effect and display content of each display interface may be determined according to an actual application scenario and a specific use need. This is not limited in this embodiment of this application.

Further, in a scenario of a missed call reminder, a locating control may be further provided on the call interface for calling back the wearable device, so that the user can conveniently jump to the locating interface in the associated application when the electronic device is called back, and view location information of the user corresponding to the wearable device in a timely manner, so as to meet an urgent need of the user to simultaneously call back and view the locating, thereby not only improving safety and timeliness of safety prompt delivery of the wearable device, but further improving convenience of viewing and processing the safety prompt message, further ensuring safety of the user corresponding to the wearable device, and further improving user experience. That is, in a possible implementation of this embodiment of this application, after the displaying, on the call interface, the second locating control corresponding to the wearable device, the method may further include:
starting the associated application in response to a trigger operation on the second locating control, jumping to a locating interface corresponding to the wearable device, and displaying, on the locating interface, a jump control corresponding to the call interface.

In a possible implementation, after the wearable device is called back and the call interface corresponding to the wearable device is displayed, the user may further jump to the locating interface corresponding to the wearable device by using the second locating control on the call interface. Therefore, in a process of calling back the wearable device, if a trigger operation of the user on the second locating control on the call interface, the associated application corresponding to the wearable device may be started, and the locating interface corresponding to the wearable device is jumped to, so as to display real-time locating data of the wearable device, and display, on the locating interface, a jump control corresponding to the call interface.

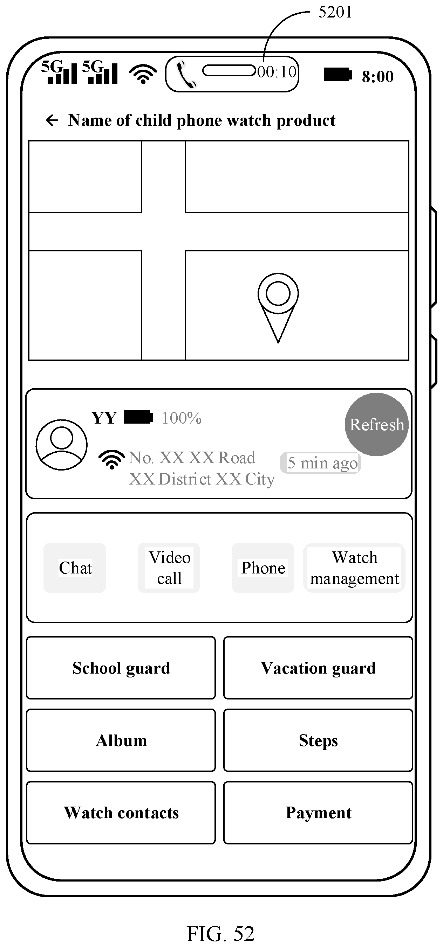

For example, the wearable device is a child phone watch, and when a trigger operation of the user on the second locating control 5001 in FIG. 50, a locating interface corresponding to the child phone watch shown in FIG. 52 may be jumped to. The locating interface may include a jump control 5201 corresponding to a call interface. The jump control 5201 may be displayed in the capsule reminder manner.

Further, in a scenario of a missed call reminder, after the user jumps to the locating interface in the associated application by using the locating control on the call interface with the wearable device, a jump control corresponding to the call interface may be further provided in the locating interface, so that the user can conveniently return to the call interface when viewing the locating, so as not to affect a normal call process of the user, and meet an urgent need of the user to simultaneously call back and view the locating, thereby not only improving safety and timeliness of safety prompt delivery of the wearable device, but further improving convenience of viewing and processing the safety prompt message, further ensuring safety of the user corresponding to the wearable device, and further improving user experience. That is, in a possible implementation of this embodiment of this application, after the displaying the jump control corresponding to the call interface on the locating interface, the method may further include:
jumping to the call interface in response to a trigger operation on the jump control corresponding to the call interface.

In a possible implementation, after jumping to the locating interface corresponding to the wearable device in a process of calling back the wearable device, the user may further jump back to the call interface with the wearable device by using a jump control corresponding to the call interface in the locating interface. Therefore, if a trigger operation of the user on the jump control corresponding to the call interface in the locating interface is obtained, the call interface with the wearable device may be jumped back to.

For example, the wearable device is a child phone watch, and when a trigger operation of the user on the jump control 5201 corresponding to the call interface in FIG. 52 is obtained, the call interface with the child phone watch shown in FIG. 50 may be jumped back to.

Further, when a missed call reminder message is displayed, the user may directly open, by using another region in a display region corresponding to the missed call reminder message, the associated application corresponding to the wearable device, and the safety prompt message is displayed in the associated application, a callback control may be further provided in the interface, so that the user can directly call back the wearable device by using the callback control, thereby improving not only safety and timeliness of safety prompt delivery of the wearable device, but further improving convenience of viewing and processing the safety prompt message, further improving user experience. That is, in a possible implementation of this embodiment of this application, the display interface corresponding to the safety prompt message may further include a second callback control. Correspondingly, after the starting the associated application in response to a trigger operation on another region in the display region corresponding to the target touch point, and jumping to the display interface corresponding to the safety prompt message, the method may further include:
initiating a callback to the wearable device in response to a trigger operation on the second callback control, and displaying a call interface with the wearable device.

In a possible implementation, after another region in the display region corresponding to the target touch point is triggered to jump to the display interface corresponding to the safety prompt message, the user may further trigger the second callback control in the display interface to call back the wearable device and display the call interface corresponding to the wearable device.

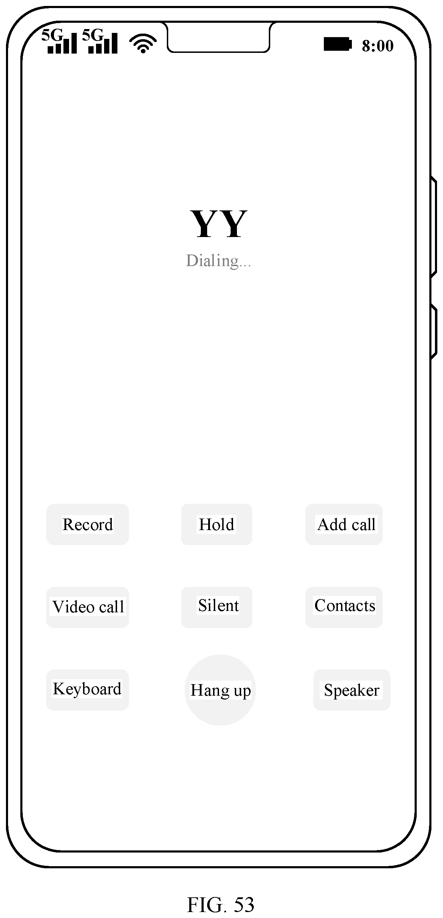

For example, the wearable device is a child phone watch, and when a trigger operation of the user on the second callback control 5101 in FIG. 51, the call interface with the child phone watch shown in FIG. 50 may be jumped to, that is, the call interface may include the second locating control 5001. Alternatively, a call interface with the child phone watch shown in FIG. 53 may be jumped to, that is, the call interface may not include the second locating control.

Further, a display region corresponding to a message reminder manner of a capsule notification is relatively small, and a safety prompt message cannot be fully displayed. Therefore, when the user triggers a touch point of a capsule notification type, a message reminder manner of the touch point may be switched to an in-capsule notification reminder with a relatively large display region, so that the user can quickly view complete information of the safety prompt, thereby improving not only safety and timeliness of safety prompt delivery of the wearable device, but further improving convenience of viewing and processing the safety prompt message, further improving user experience. That is, in a possible implementation of this embodiment of this application, the message reminder manner corresponding to the target touch point is a capsule reminder. Correspondingly, step 102 includes:
switching the message reminder manner corresponding to the target touch point to the in-capsule notification reminder in response to the trigger operation on the target touch point, and displaying the target touch point in the in-capsule notification reminder manner.

In a possible implementation, for a touch point displayed in the capsule reminder manner, a display manner corresponding to the touch point may be switched to the in-capsule message reminder manner by triggering the touch point. Therefore, when a trigger operation of the user on the target touch point whose display manner is the capsule reminder manner, the display manner of the target touch point may be switched to the in-capsule message reminder manner.

For example, if a trigger operation of the user on the touch point 320 in FIG. 3 or the touch point 410 in FIG. 4 is obtained, a display manner of the touch point may be switched to the in-capsule message reminder manner, that is, the touch point 520 shown in FIG. 5 is switched to for display.

In another possible implementation, for a touch point displayed in the capsule reminder manner, different types of trigger operations may be further set, and when a first type of trigger operation of the user on a target touch point whose display manner is the capsule reminder manner is obtained, the display manner of the target touch point may be switched to the in-capsule message reminder manner. When a second type of trigger operation of the user on the target touch point, the locating interface corresponding to the wearable device may be jumped to or the wearable device may be called back in the manner described in the foregoing embodiment.

It should be noted that, in actual use, specific types of trigger operations of the first type and the second type may be set according to an actual need and a specific application scenario. This is not limited in this embodiment of this application. For example, the trigger operation of the first type may be a tap operation, and the trigger operation of the second type may be a double tap operation, a long press operation, or the like.

In addition, it should be understood that the trigger operation mentioned in this embodiment of this application may include, but is not limited to, touch (for example, tap, double tap, long press, or slide), voice control, a gesture, or the like. This is not limited in this application.

According to the safety prompt method for a wearable device provided in this embodiment of this application, the safety prompt message corresponding to the wearable device is displayed simultaneously in a plurality of message reminder manners such as the AOD interface reminder, the capsule reminder, the in-capsule notification reminder, the message center reminder, the scenario card reminder, and the associated device reminder, and the touch point corresponding to the safety prompt message is also provided, so that the safety prompt message can be delivered the user in time in a plurality of manners. Therefore, when an electronic device is in various use states, the user can learn of and view the safety prompt message in time, thereby improving safety and timeliness of safety prompt delivery of the wearable device, and improving user experience.

It should be understood that sequence numbers of the steps in the foregoing embodiments do not mean execution sequences. The execution sequences of the procedures should be determined based on functions and internal logic of the procedures, and should not be construed as any limitation on the implementation procedures of the embodiments of this application.

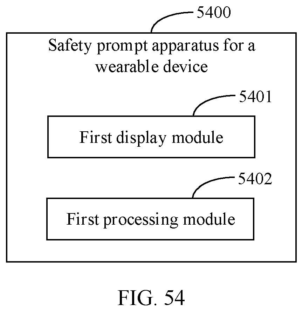

Corresponding to the safety prompt method for a wearable device described in the foregoing embodiment, FIG. 54 shows a structural block diagram of a safety prompt apparatus for a wearable device according to an embodiment of this application. For ease of description, only a part related to this embodiment of this application is shown.

With reference to FIG. 54, the apparatus 5400 includes:
a first display module 5401, configured to: displaying, in a current device in a plurality of message reminder manners when a safety prompt message corresponding to a wearable device associated with the current device is obtained, a touch point corresponding to the safety prompt message, where the message reminder manners include at least two of the following manners: an AOD interface reminder, a capsule reminder, an in-capsule notification reminder, a message center reminder, a scenario card reminder, and an associated device reminder; and
a first processing module 5402, configured to process the safety prompt message in response to a trigger operation on a target touch point, where the target touch point is any touch point.

In actual use, the safety prompt apparatus for a wearable device provided in this embodiment of this application may be configured in any electronic device, so as to perform the foregoing safety prompt method for a wearable device.

According to the safety prompt apparatus for a wearable device provided in this embodiment of this application, the safety prompt message corresponding to the wearable device is displayed simultaneously in a plurality of message reminder manners such as the AOD interface reminder, the capsule reminder, the in-capsule notification reminder, the message center reminder, the scenario card reminder, and the associated device reminder, and the touch point corresponding to the safety prompt message is also provided, so that the safety prompt message can be delivered to the user in time in a plurality of manners. Therefore, when an electronic device is in various use states, the user can learn of and view the safety prompt message in time, thereby improving safety and timeliness of safety prompt delivery of the wearable device, and improving user experience.

In a possible implementation of this application, the safety prompt message includes at least one of a location reminder message and a missed call reminder message.

Further, in another possible implementation of this application, the safety prompt message is the location reminder message, and a display region corresponding to the target touch point includes a first locating control; and correspondingly, the first processing module 5402 includes:
a first starting unit, configured to: start an associated application corresponding to the wearable device in response to a trigger operation on the first locating control, and jump to a locating interface corresponding to the wearable device;
   or
a second starting unit, configured to: start the associated application in response to a trigger operation on another region in the display region corresponding to the target touch point, and jump to a display interface corresponding to the safety prompt message, where the another region refers to a region other than the first locating control in the display region corresponding to the target touch point.

Further, in still another possible implementation of this application, the safety prompt message is the location reminder message, and a display region corresponding to the target touch point does not include a first locating control; and correspondingly, the first processing module 5402 includes:
a third starting unit, configured to: start an associated application corresponding to the wearable device in response to a trigger operation on the display region corresponding to the target touch point, and jump to a locating interface corresponding to the wearable device.

Further, in yet another possible implementation of this application, the safety prompt message is the location reminder message; and correspondingly, the first display module 5401 includes:
a first determining unit, configured to determine a message type corresponding to the safety prompt message, where the message type includes at least one of "arrived at a specified location", "left a specified location", and "not arrived at a specified location";
a second determining unit, configured to determine, according to the message type corresponding to the safety prompt message, a display effect corresponding to the touch point; and
a first display unit, configured to display, in the current device according to the display effect corresponding to the touch point, the touch point corresponding to the safety prompt message in the plurality of message reminder manners.

Further, in yet another possible implementation of this application, the safety prompt message is the missed call reminder message, and a display region corresponding to the target touch point includes at least one of a first callback control and a first locating control; and correspondingly, the first processing module 5402 includes:
a first callback unit, configured to: initiate a callback to the wearable device in response to a trigger operation on the first callback control in the display region corresponding to the target touch point, display a call interface with the wearable device, and display, on the call interface, a second locating control corresponding to the wearable device;
   or
a fourth starting unit, configured to: start an associated application corresponding to the wearable device in response to a trigger operation on the first locating control, and jump to a locating interface corresponding to the wearable device;
   or
a fifth starting unit, configured to: start the associated application in response to a trigger operation on another region in the display region corresponding to the target touch point, and jump to a display interface corresponding to the safety prompt message, where the another region refers to a region other than the first callback control and the first locating control in the display region corresponding to the target touch point.

Further, in another possible implementation of this application, the safety prompt message is the missed call reminder message, and a display region corresponding to the target touch point does not include a first callback control and a first locating control; and correspondingly, the first processing module 5402 includes:
a second callback unit, configured to: initiate a callback to the wearable device in response to a trigger operation on the display region corresponding to the target touch point, display a call interface with the wearable device, and display, on the call interface, a second locating control corresponding to the wearable device.

Further, in another possible implementation of this application, the first processing module 5402 further includes:
a sixth starting unit, configured to: start the associated application in response to a trigger operation on the second locating control, jump to a locating interface corresponding to the wearable device, and display, on the locating interface, a jump control corresponding to the call interface.

Further, in still another possible implementation of this application, the first processing module 5402 further includes:
a first jump unit, configured to jump to the call interface in response to a trigger operation on the jump control corresponding to the call interface.

Further, in yet another possible implementation of this application, the display interface corresponding to the safety prompt message further includes a second callback control; and correspondingly, the first processing module 5402 further includes:
a third callback unit, configured to: initiate a callback to the wearable device in response to a trigger operation on the second callback control, and display a call interface with the wearable device.

Further, in yet another possible implementation of this application, the first display module 5401 includes:
a third determining unit, configured to determine a device type corresponding to the current device, where the device type includes a called party and a non-called party;
a fourth determining unit, configured to determine, according to the device type corresponding to the current device, a display effect corresponding to the touch point; and
a second display unit, configured to display, in the current device according to the display effect corresponding to the touch point, the touch point corresponding to the safety prompt message in the plurality of message reminder manners.

Further, in another possible implementation of this application, the first display module 5401 includes:
a fifth determining unit, configured to determine an incoming call type corresponding to the missed call reminder message;
a sixth determining unit, configured to determine, according to the incoming call type corresponding to the missed call reminder message, a display effect corresponding to the touch point; and
a third display unit, configured to display, in the current device according to the display effect corresponding to the touch point, the touch point corresponding to the safety prompt message in the plurality of message reminder manners.

Further, in still another possible implementation of this application, a message reminder manner corresponding to the target touch point is the capsule reminder; and correspondingly, the first processing module 5402 includes:
a first switching unit, configured to: switch the message reminder manner corresponding to the target touch point to the in-capsule notification reminder in response to the trigger operation on the target touch point, and display the target touch point in the in-capsule notification reminder manner.

Further, in yet another possible implementation of this application, the apparatus 5400 further includes:
a second display module, configured to display, in the current device, a scenario card corresponding to a safety prompt function of the wearable device, where the scenario card includes an enable control;
a first starting module, configured to: start, in response to a trigger operation on the enable control, the associated application corresponding to the wearable device, and jump to a function enabling interface corresponding to the safety prompt function; and
a second starting module, configured to enable the safety prompt function of the wearable device in the current device in response to a setting operation performed by a user on the function enabling interface.

It should be noted that content such as information interaction or an execution process between the apparatuses/units is based on a same concept as that in the method embodiments of this application. Therefore, for specific functions and technical effects brought by the apparatuses/units, refer to the method embodiment parts. Details are not described herein again.

Persons skilled in the art may clearly understand that, for ease and brevity of description, division of the foregoing functional units and modules is merely used as an example for description. In an actual application, the foregoing functions may be allocated to different functional units and modules based on a requirement, that is, an internal structure of the apparatus is divided into different functional units or modules, to complete all or some of the functions described above. The functional units or modules in the embodiments may be integrated into one processing unit, each unit may exist alone physically, or two or more units are integrated into one unit. The foregoing integrated unit may be implemented in a form of hardware, or may be implemented in a form of a software functional unit. In addition, specific names of the functional units and modules are also used for ease of mutual distinction, and are not used to limit the protection scope of this application. For a specific working process of each of the units and the modules in the foregoing system, refer to a corresponding process in the foregoing method embodiments. Details are not described herein again.

To implement the foregoing embodiments, this application further provides an electronic device.

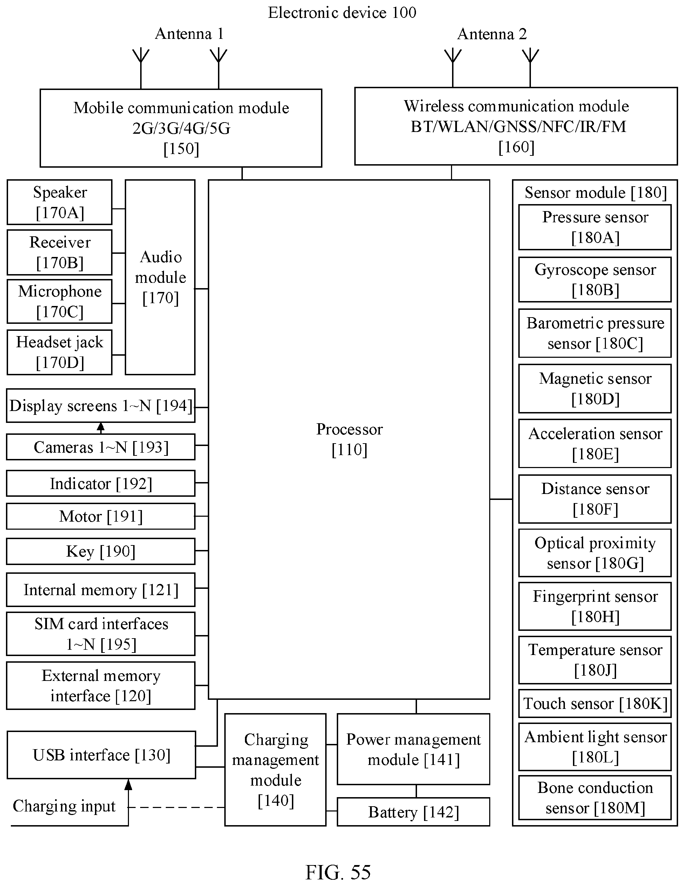

FIG. 55 is a schematic diagram of a structure of an electronic device according to an embodiment of this application.

Referring to FIG. 55, an electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display screen 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure illustrated in this embodiment of this application constitutes no specific limitation on the electronic device 100. In some other embodiments of this application, the electronic device 100 may include more or fewer components than those shown in the figure, combine some components, split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the electronic device 100. The controller may generate an operation control signal based on instruction operation code and a timing signal, to complete control of instruction fetching and instruction execution.

A memory may be further disposed in the processor 110 to store instructions and data. In some embodiments, the memory in the processor 110 is a cache. The memory may store instructions or data recently used or cyclically used by the processor 110. If the processor 110 needs to use the instructions or the data again, the processor 110 may directly invoke the instructions or the data from the memory. This avoids repeated access and reduces a waiting time of the processor 110, thereby improving system efficiency.

A wireless communication function of the electronic device 100 may be implemented by using the antenna 1, the antenna 2, the mobile communication module 150, the wireless communication module 160, the modem processor, the baseband processor, and the like.

The electronic device 100 implements a display function by using the GPU, the display screen 194, the application processor, and the like. The GPU is a microprocessor for image processing, and is connected to the display screen 194 and the application processor. The GPU is configured to perform mathematical and geometric computing for graphics rendering. The processor 110 may include one or more GPUs that execute program instructions to generate or change display information.

The display screen 194 is configured to display an image, a video, and the like. The display screen 194 includes a display panel. The display panel may be a liquid crystal display (liquid crystal display, LCD), an organic light-emitting diode (organic light-emitting diode, OLED), an active-matrix organic light emitting diode or active-matrix organic light emitting diode (active-matrix organic light emitting diode, AMOLED), a flex light-emitting diode (flex light-emitting diode, FLED), a Miniled, a MicroLed, a Micro-oLed, a quantum dot light emitting diode (quantum dot light emitting diodes, QLED), or the like. In some embodiments, the electronic device 100 may include 1 or N display screens 194, where N is an integer greater than 1.

The internal memory 121 may be configured to store computer-executable program code. The computer-executable program code includes instructions. The processor 110 runs the instructions stored in the internal memory 121, to perform various function applications and data processing of the electronic device 100. The internal memory 121 may include a program storage region and a data storage region. The program storage region may store an operating system, an application required by at least one function (for example, a sound playback function or an image playback function), and the like. The data storage region may store data (such as audio data and an address book) and the like created during use of the electronic device 100. In addition, the internal memory 121 may include a high-speed random access memory, and may further include a non-volatile memory, for example, at least one magnetic disk storage device, a flash memory device, or a universal flash storage (universal flash storage, UFS).

It should be noted that for an implementation process and a technical principle of the electronic device in this embodiment, reference may be made to the foregoing explanation and description of the safety prompt method for a wearable device in embodiments of this application. Details are not described herein again.

An embodiment of this application further provides a computer-readable storage medium. The computer-readable storage medium stores a computer program, and when the computer program is executed by a processor, the steps in the foregoing method embodiments may be implemented.

An embodiment of this application provides a computer program product, the computer program product, when run on an electronic device, causing the electronic device to implement steps in the above method embodiments.

When the integrated unit is implemented in the form of the software functional unit and sold or used as an independent product, the integrated unit may be stored in a computer-readable storage medium. Based on such an understanding, in this application, all or a part of the processes in the methods in the foregoing embodiments may be implemented by a computer program instructing related hardware. The computer program may be stored in a computer-readable storage medium. When the computer program is executed by a processor, the steps in the foregoing method embodiments may be implemented. The computer program includes computer program code, and the computer program code may be in a source code form, an object code form, an executable file, some intermediate forms, or the like. The computer-readable medium may include at least any entity or apparatus capable of carrying the computer program code to an apparatus/electronic device, a recording medium, a computer memory, a read-only memory (read-only memory, ROM), a random access memory (random access memory, RAM), an electrical carrier signal, a telecommunications signal, and a software distribution medium, for example, a USB flash drive, a removable hard disk, a magnetic disk, or an optical disc. In some jurisdictions, the computer-readable medium cannot be an electrical carrier signal or a telecommunications signal according to legislation and patent practice.

In the foregoing embodiments, the descriptions of the embodiments have respective focuses. For a part that is not detailed or described in an embodiment, refer to related descriptions in other embodiments.

In the foregoing embodiments, specific details such as a specific system structure and a technology are proposed for description rather than limitation, to thoroughly understand embodiments of this application. However, a person skilled in the art should understand that this application may also be implemented in another embodiment without these specific details. In other cases, detailed descriptions about a well-known system, apparatus, circuit, and method are omitted to prevent unnecessary details from obscuring the description of this application.

It should be understood that when being used in this specification and the appended claims of this application, the term "include" indicates presence of a described feature, entirety, step, operation, element, and/or component, but does not rule out presence or addition of one or more other features, entireties, steps, operations, elements, components, and/or sets thereof.

It should also be understood that the term "and/or" used in this specification and the appended claims of this application means any combination and all possible combinations of one or more of listed associated items, and these combinations are included.

As used in this specification and the appended claims of this application, the term "if" may be interpreted according to the context as "when...", "once", "determining in response to", or "detecting in response to". Similarly, the phrase "if it is determined that" or "if [a described condition or event] is detected" may be interpreted according to the context as "once it is determined that", "it is determined that in response to", "once [a described condition or event] is detected", or "[a described condition or event] is detected in response to".

In addition, in the descriptions of this specification and the appended claims of this application, the terms "first", "second", "third", and the like are merely used to distinguish between the descriptions, and cannot be understood as indicating or implying relative importance.

Referring to "one embodiment", "some embodiments", or the like that is described in this specification of this application means that specific features, structures, or characteristics described with reference to one or more embodiments are included in the one or more embodiments of this application. Therefore, statements such as "in one embodiment", "in some embodiments", "in some other embodiments" that appear in different parts of this specification do not necessarily refer to same embodiments, but mean "one or more but not all embodiments", unless otherwise specifically emphasized in other manners. The terms "include", "comprise", and "have", and variants thereof all mean "include but are not limited to", unless otherwise specially emphasized in other manners.

Persons of ordinary skill in the art may be aware that the units and the algorithm steps in the examples described with reference to the embodiments disclosed in this specification can be implemented by using electronic hardware or a combination of computer software and electronic hardware. Whether these functions are performed by hardware or software depends on specific applications and design constraints of the technical solutions. A person skilled in the art may use different methods to implement the described functions for each specific application, but it should not be considered that such an implementation goes beyond the scope of this application.

In embodiments provided in this application, it should be understood that the disclosed apparatus/electronic device and method may be implemented in other manners. For example, the described apparatus/electronic device embodiment is merely an example. For example, division of the modules or units is merely logical function division. In actual implementation, there may be another division manner. For example, a plurality of units or components may be combined or integrated into another system, or some characteristics may be ignored or not performed. In addition, the displayed or discussed mutual coupling, direct coupling, or communication connection may be implemented through some interfaces, and indirect coupling or a communication connection of the apparatuses or units may be in an electrical, mechanical, or another form.

The units described as separate components may or may not be physically separated, and components displayed as units may or may not be physical units, in other words, may be located in one place, or may be distributed on a plurality of network units. Some or all of the units may be selected based on actual requirements to achieve the objectives of the solutions in the embodiments.

The foregoing embodiments are merely used to describe the technical solutions of this application, instead of limiting the technical solutions of this application. Although this application is described in detail with reference to the foregoing embodiments, persons of ordinary skill in the art should understand that they may still modify the technical solutions described in the foregoing embodiments, or perform equivalent replacement on some technical features. However, these modifications or replacements do not make the essence of the corresponding technical solutions depart from the spirit and scope of the technical solutions in embodiments of this application, and shall fall within the protection scope of this application.

## Claims

1. A safety prompt method for a wearable device, comprising:
displaying, in a current device in a plurality of message reminder manners when a safety prompt message corresponding to a wearable device associated with the current device is obtained, a touch point corresponding to the safety prompt message, wherein the message reminder manners comprise at least two of the following manners: an always on display AOD interface reminder, a capsule reminder, an in-capsule notification reminder, a message center reminder, a scenario card reminder, and an associated device reminder; and
processing the safety prompt message in response to a trigger operation on a target touch point, wherein the target touch point is any touch point.

2. The method according to claim 1, wherein the safety prompt message comprises at least one of a location reminder message and a missed call reminder message.

3. The method according to claim 2, wherein the safety prompt message is the location reminder message, a display region corresponding to the target touch point comprises a first locating control, and the processing the safety prompt message in response to a trigger operation on a target touch point comprises:
starting an associated application corresponding to the wearable device in response to a trigger operation on the first locating control, and jumping to a locating interface corresponding to the wearable device;
or
starting the associated application in response to a trigger operation on another region in the display region corresponding to the target touch point, and jumping to a display interface corresponding to the safety prompt message, wherein the another region refers to a region other than the first locating control in the display region corresponding to the target touch point.

4. The method according to claim 2, wherein the safety prompt message is the location reminder message, a display region corresponding to the target touch point does not comprise a first locating control, and the processing the safety prompt message in response to a trigger operation on a target touch point comprises:
starting an associated application corresponding to the wearable device in response to a trigger operation on the display region corresponding to the target touch point, and jumping to a locating interface corresponding to the wearable device.

5. The method according to any one of claims 2-4, wherein the safety prompt message is the location reminder message, and the displaying, in a current device in a plurality of message reminder manners, a touch point corresponding to the safety prompt message comprises:
determining a message type corresponding to the safety prompt message, wherein the message type comprises at least one of "arrived at a specified location", "left a specified location", and "not arrived at a specified location";
determining, according to the message type corresponding to the safety prompt message, a display effect corresponding to the touch point; and
displaying, in the current device according to the display effect corresponding to the touch point, the touch point corresponding to the safety prompt message in the plurality of message reminder manners.

6. The method according to claim 2, wherein the safety prompt message is the missed call reminder message, a display region corresponding to the target touch point comprises at least one of a first callback control and a first locating control, and the processing the safety prompt message in response to a trigger operation on a target touch point comprises:
initiating a callback to the wearable device in response to a trigger operation on the first callback control in the display region corresponding to the target touch point, displaying a call interface with the wearable device, and displaying, on the call interface, a second locating control corresponding to the wearable device;
or
starting an associated application corresponding to the wearable device in response to a trigger operation on the first locating control, and jumping to a locating interface corresponding to the wearable device;
or
starting the associated application in response to a trigger operation on another region in the display region corresponding to the target touch point, and jumping to a display interface corresponding to the safety prompt message, wherein the another region refers to a region other than the first callback control and the first locating control in the display region corresponding to the target touch point.

7. The method according to claim 2, wherein the safety prompt message is the missed call reminder message, a display region corresponding to the target touch point does not comprise a first callback control and a first locating control, and the processing the safety prompt message in response to a trigger operation on a target touch point comprises:
initiating a callback to the wearable device in response to a trigger operation on the display region corresponding to the target touch point, displaying a call interface with the wearable device, and displaying, on the call interface, a second locating control corresponding to the wearable device.

8. The method according to claim 6 or 7, after the displaying, on the call interface, a second locating control corresponding to the wearable device, further comprising:
starting the associated application in response to a trigger operation on the second locating control, jumping to a locating interface corresponding to the wearable device, and displaying, on the locating interface, a jump control corresponding to the call interface.

9. The method according to claim 8, after the displaying, on the locating interface, a jump control corresponding to the call interface, further comprising:
jumping to the call interface in response to a trigger operation on the jump control corresponding to the call interface.

10. The method according to claim 6, wherein the display interface corresponding to the safety prompt message further comprises a second callback control, and after the starting the associated application in response to a trigger operation on another region in the display region corresponding to the target touch point, and jumping to a display interface corresponding to the safety prompt message, the method further comprises:
initiating a callback to the wearable device in response to a trigger operation on the second callback control, and displaying a call interface with the wearable device.

11. The method according to any one of claims 6-10, wherein the displaying, in a current device in a plurality of message reminder manners, a touch point corresponding to the safety prompt message comprises:
determining a device type corresponding to the current device, wherein the device type comprises a called party and a non-called party;
determining, according to the device type corresponding to the current device, a display effect corresponding to the touch point; and
displaying, in the current device according to the display effect corresponding to the touch point, the touch point corresponding to the safety prompt message in the plurality of message reminder manners.

12. The method according to any one of claims 6-10, wherein the displaying, in a current device in a plurality of message reminder manners, a touch point corresponding to the safety prompt message comprises:
determining an incoming call type corresponding to the missed call reminder message;
determining, according to the incoming call type corresponding to the missed call reminder message, a display effect corresponding to the touch point; and
displaying, in the current device according to the display effect corresponding to the touch point, the touch point corresponding to the safety prompt message in the plurality of message reminder manners.

13. The method according to any one of claims 1-12, wherein a message reminder manner corresponding to the target touch point is the capsule reminder, and the processing the safety prompt message in response to a trigger operation on a target touch point comprises:
switching the message reminder manner corresponding to the target touch point to the in-capsule notification reminder in response to the trigger operation on the target touch point, and displaying the target touch point in the in-capsule notification reminder manner.

14. The method according to any one of claims 1-13, wherein before the displaying, in a current device in a plurality of message reminder manners when a safety prompt message corresponding to a wearable device associated with the current device is obtained, a touch point corresponding to the safety prompt message, the method further comprises:
displaying, in the current device, a scenario card corresponding to a safety prompt function of the wearable device, wherein the scenario card comprises an enable control;
starting, in response to a trigger operation on the enable control, the associated application corresponding to the wearable device, and jumping to a function enabling interface corresponding to the safety prompt function; and
enabling the safety prompt function of the wearable device in the current device in response to a setting operation performed by a user on the function enabling interface.

15. An electronic device, comprising a memory, a processor, and a computer program that is stored in the memory and that is capable of running on the processor, wherein when the processor executes the computer program, the electronic device implements the method according to any one of claims 1-14.

16. A computer-readable storage medium, wherein the computer-readable storage medium stores a computer program, and when the computer program is executed by an electronic device, the method according to any one of claims 1-14 is implemented.
